# FASCICULE DE BREVET EUROPEEN

(11) **EP 2 931 736 B1**
(45) Date de publication et mention de la délivrance du brevet: **22.03.2017**
(21) Numéro de dépôt: 13820802.0
(22) Date de dépôt: 11.12.2013
(51) Int. Cl.: C07F 15/00, B01J 31/22

(54) **COMPLEXES DE RUTHENIUM COMPRENANT UN DIAMINOCARBENE N-HETEROCYCLIQUE INSATURE DISSYMETRIQUE**
RUTHENIUMKOMPLEXE MIT EINEM ASYMMETRISCHEN UNGESÄTTIGTEN N-HETEROCYCLISCHEN DIAMINOCARBEN
RUTHENIUM COMPLEXES COMPRISING AN ASYMMETRICAL UNSATURATED N-HETEROCYCLIC DIAMINOCARBENE

(30) Priorité: 12.12.2012 FR 1261971
(43) Date de publication de la demande: 21.10.2015
(73) Titulaire: Ecole Nationale Supérieure de Chimie de Rennes, 35708 Rennes Cedex 7 (FR); Centre National de la Recherche Scientifique (C.N.R.S.), 75794 Paris Cedex 16 (FR)
(72) Inventeur: MAUDUIT, Marc, F-35500 Vitre (FR); ROUEN, Mathieu, F-27430 Muids (FR)
(74) Mandataire: Cabinet Netter
(86) Numéro de dépôt international: PCT/FR2013/053037
(87) Numéro de publication internationale: WO 2014/091157

(56) Documents cités:
- US-A1- 2006 287 450
- LEDOUX NELE ET AL: "Comparative investigation of Hoveyda-Grubbs catalysts bearing modified N-heterocyclic carbene ligands", ADVANCED SYNTHESIS & CATALYSIS, WILEY VCH VERLAG, WEINHEIM, DE, vol. 349, no. 10, 2 juillet 2007 (2007-07-02), pages 1692-1700, XP009142602, ISSN: 1615-4150, DOI: 10.1002/ADSC.200700042 [extrait le 2007-07-17] cité dans la demande
- CEZARY SAMOJLOWICZ ET AL: "Ruthenium-Based Olefin Metathesis Catalysts Bearing N -Heterocyclic Carbene Ligands", CHEMICAL REVIEWS, vol. 109, no. 8, 12 août 2009 (2009-08-12) , pages 3708-3742, XP055071094, ISSN: 0009-2665, DOI: 10.1021/cr800524f cité dans la demande
- ALOIS FÜRSTNER ET AL: "Convenient, scalable and flexible method for the preparation of imidazolium salts with previously inaccessible substitution patterns", CHEMICAL COMMUNICATIONS, no. 20, 1 janvier 2006 (2006-01-01), page 2176, XP055054925, ISSN: 1359-7345, DOI: 10.1039/b604236h

## Description

La présente invention vise des sels d'imidazolium dissymétriques et leur procédé de préparation.

Les diaminocarbènes N-hétérocycliques ou NHC (en anglais *N-Heterocyclic Carbene*) sont des ligands vastement utilisés en catalyse organométallique. Ceci est dû au fait que les ligands diaminocarbènes N-hétérocycliques peuvent former des espèces hautement réactives lorsqu'ils sont associés à un métal. Ces espèces sont alors appelées des complexes métalliques diaminocarbèniques.

Parmi les nombreux ligands, on peut notamment citer les ligands de type imidazolidine-2-ylidene (NHC saturé), et les ligands de type imidazoline-2-ylidene (NHC insaturé). En effet, ces ligands forment ensemble avec un métal des complexes particulièrement adaptés pour la catalyse organométallique. Les publications *NHCs in* Synthesis, S. P. Nolan, Ed., 2006, Wiley-VCH ; NHCs in Transition Metal Catalysis, F. Glorius, Ed. 2006, Springer ; N-Heterocyclic Carbenes, S. D. Diez-Gonzalez, Ed. 2011, RSC Catalysis Series, RSC Publishing, divulguent des complexes métalliques diaminocarbèniques de ce type.

Il est aujourd'hui démontré que les complexes métalliques diaminocarbèniques ont permis, non-seulement d'augmenter le rendement de certaines réactions chimiques, mais aussi de réaliser des nouvelles réactions chimiques jusqu'alors inexistantes. Les complexes métalliques diaminocarbèniques ont par exemple permis d'améliorer les rendements de la majorité des réactions métallo-catalysées, et notamment dans des réactions de couplages C-C, C-N, C-O, C-S etc... Ces réactions de couplage sont largement utilisées dans les procédés industriels de chimie fine comme le décrit la publication Dunetz et al., Chem. Rev. 2011, 111, 2177-2250.

Toutefois, c'est certainement en métathèse des oléfines que les métaux portant des ligands diaminocarbènes N-hétérocycliques ont le plus apporté en termes d'amélioration dans les rendements de réaction, tout en permettant de réduire significativement la charge catalytique nécessaire et suffisante pour catalyser la réaction. Ceci est notamment rapporté dans Grela et al., Chem. Rev. 2009, 109, 3708-3742.

De manière générale, l'état de la technique montre que ce sont des ligands diaminocarbéniques imidazolidine-2-ylidene ou imidazoline-2-ylidene 1,3-disubstitués symétriques qui sont impliqués dans les systèmes catalytiques organométalliques (cf. publications citées ci-dessus).

Néanmoins, certaines divulgations montrent que des ligands diaminocarbéniques imidazolidine-2-ylidene ou imidazoline-2-ylidene 1,3-disubstitués dissymétriques, donc portant des groupements carbonés non-identiques, peuvent également être impliqués dans les systèmes catalytiques organométalliques. Ainsi, la publication Blechert et al., Dalton Trans. 2012, 41, 8215-8225 montre de bonnes réactivités et sélectivités pour des ligands carbéniques dissymétriques. La publication Grubbs et al., J. Am. Chem. Soc. 2011, 113, 7490-7496 montre par ailleurs que de bonnes réactivités et sélectivités peuvent être observées lorsqu'un ligand diaminocarbène N-hétérocyclique porte un substituant aromatique d'une part et un groupement alkyle d'autre part.

La nature et le choix des groupements carbonés substituants restent toutefois très limités en ce qui concerne les ligands diaminocarbéniques imidazoline-2-ylidene 1,3-disubstitués dissymétriques. Ceci est dû en particulier à la difficulté de la synthèse des sels d'imidazolium dissymétriques précurseurs.

En effet, pour synthétiser un ligand diaminocarbénique imidazoline-2-ylidene 1,3-disubstitué dissymétrique il est crucial de générer d'abord un sel d'imidazolium précurseur. Cette synthèse est complexe et demande, soit un nombre très élevé d'opérations chimiques (4 à 6 opérations chimiques distinctes), soit un choix préalable limité des groupements carbonés substituants.

La publication Organ et al., Angew. Chem. Int. Ed., 2007, 46, 2768-2813., et la publication César et al. Chem. Rev. 2011, 111, 2701-2733 montrent la complexité et les limites de la synthèse de ligands diaminocarbéniques imidazoline-2-ylidene 1,3-disubstitués dissymétriques.

Des complexes comportant un ligand 1-aryl-3-cycloalkyl-imidazolidine-2-ylidène ainsi qu'un groupe 2-alcoxybenzylidène (type Hoveyda-Grubbs), pour utilisation comme catalyseurs de métathèse ont été montrés dans la publication Adv. Synthesis & Catalysis 2007, 349(10), 1692-1700.

Les ligands diaminocarbéniques imidazoline-2-ylidene 1,3-disubstitués dissymétriques présentent un grand intérêt scientifique et économique, mais ne peuvent pas à ce jour être synthétisés de manière compétitive au plan industriel car le nombre d'opérations chimiques est bien trop élevé notamment. De plus, le choix des groupements substituants non-identiques est limité.

Tout particulièrement, l'état de la technique ne décrit aucune méthode adéquate pour synthétiser des ligands diaminocarbènes N-hétérocycliques de type 1-aryle-3-cycloalkyle-imidazoline-2-ylidene (à savoir des NHCs substitués, d'une part, par un groupement aromatique, et d'autre part, par un groupement alkyle aliphatique secondaire cyclique). Il va de soi que l'état de la technique ne décrit pas de complexes métalliques diaminocarbèniques portant ces ligands.

L'invention vient améliorer la situation.

Ainsi, l'invention vise un complexe de ruthénium alkylidène comprenant un ligand 1-aryl-3-cycloalkyl-imidazoline-2-ylidene, caractérisé en ce que le groupement cycloalkyle dudit ligand 1-aryl-3-cycloalkyl-imidazoline-2-ylidene est un alkyle aliphatique secondaire cyclique.
Le complexe de ruthénium alkylidène peut être de formule générale choisie dans le groupe constitué de la formule 1, 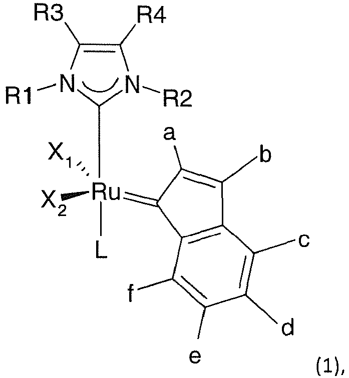 dans laquelle
R1 est un groupement aromatique,
R2 est un groupement alkyle aliphatique secondaire cyclique,
R3 et R4 sont choisis indépendamment l'un de l'autre dans le groupe constitué d'un atome d'hydrogène, d'halogénure et d'un groupement alkyle,
X₁ et X₂ sont des ligands anioniques,
L est un ligand non-chargé, et
a, b, c, d, e et f sont choisis indépendamment l'un de l'autre dans le groupe constitué d'un atome d'hydrogène, d'un groupement alkyle et d'un groupement hétéroalkyle ;
de la formule 2 : 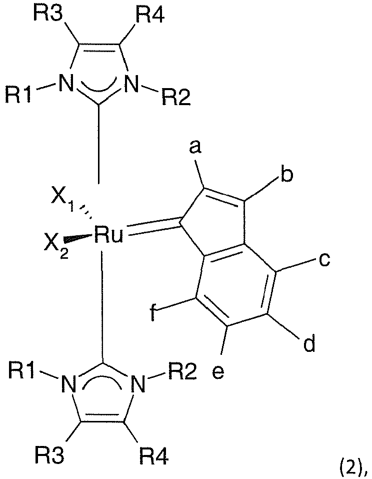 dans laquelle
R1 est un groupement aromatique,
R2 est un groupement alkyle aliphatique secondaire cyclique,
R3 et R4 sont choisis indépendamment l'un de l'autre dans le groupe constitué d'un atome d'hydrogène, d'halogénure et d'un groupement alkyle,
X₁ et X₂ sont des ligands anioniques, et
a, b, c, d, e et f sont choisis indépendamment l'un de l'autre dans le groupe constitué d'un atome d'hydrogène, d'un groupement alkyle et d'un groupement hétéroalkyle ;
de la formule 3 : 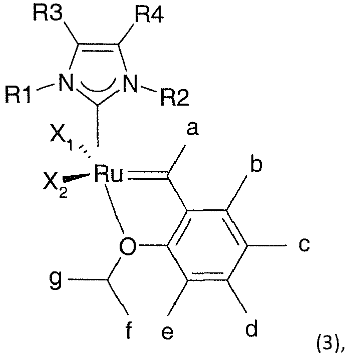 dans laquelle
R1 est un groupement aromatique,
R2 est un groupement alkyle aliphatique secondaire cyclique,
R3 et R4 sont choisis indépendamment l'un de l'autre dans le groupe constitué d'un atome d'hydrogène, d'halogénure et d'un groupement alkyle,
X₁ et X₂ sont des ligands anioniques, et
a, b, c, d, e, f et g sont choisis indépendamment l'un de l'autre dans le groupe constitué d'un atome d'hydrogène, d'un groupement alkyle et d'un groupement hétéroalkyle ;
et de la formule 4 : 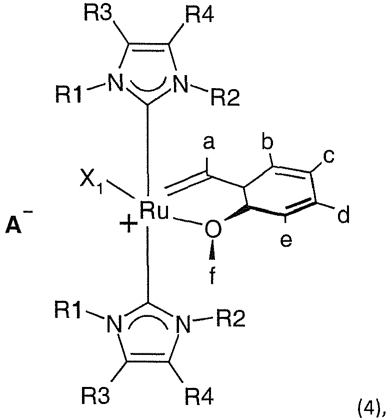 dans laquelle
R1 est un groupement aromatique,
R2 est un groupement alkyle aliphatique secondaire cyclique,
R3 et R4 sont choisis indépendamment l'un de l'autre dans le groupe constitué d'un atome d'hydrogène, d'halogénure et d'un groupement alkyle,
a, b, c, d, e et f sont choisis indépendamment l'un de l'autre dans le groupe constitué d'un atome d'hydrogène, d'un groupement alkyle et d'un groupement hétéroalkyle,
X₁ est un ligand anionique, et
A⁻ est un anion.

R1 peut être choisi dans le groupe constitué de 2,4,6-triméthylphényle, de 3,5-dinitrophényle, de 2,4,6-tris(trifluorométhyle)phényle, de 2,4,6-trichlorophényle, et de hexafluorophényle. R2 peut être choisi dans le groupe constitué de cyclopentyle, de cyclohexyle, de cycloheptyle, de cyclooctyle, de cyclodecyle, de cyclododecyle, et de cyclopentadecyle. R3 et R4 sont de préférence chacun un atome d'hydrogène.

L'invention vise également une utilisation d'un complexe de ruthénium alkylidène tel que défini ci-avant en tant que catalyseur dans une réaction de métathèse d'oléfine.

Par ailleurs, l'invention vise un procédé de préparation d'un complexe de ruthénium alkylidène comprenant les étapes suivantes :
a. former un premier mélange réactionnel par la mise en contact d'un sel d'imidazolium de formule 1S : 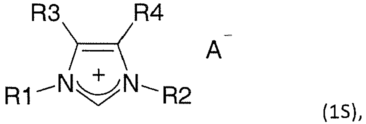 dans laquelle
   R1 est un groupement aromatique,
   R2 est choisi parmi un groupement alkyle aliphatique secondaire cyclique et un groupement hétéroalkyle,
   R3 et R4 sont choisis indépendamment l'un de l'autre dans le groupe constitué d'un atome d'hydrogène, d'halogénure et d'un groupement alkyle, et
   A⁻ est un anion,
   avec une base forte, dans du solvant, sous atmosphère inerte, à température ambiante, pendant une durée d'au moins 30 minutes ;
b. ajouter au mélange réactionnel formé à l'étape a., un complexe de ruthénium précurseur, puis chauffer à une température d'au moins 40°C pendant une durée d'au moins 2 heures ;
c. isoler un complexe de ruthénium alkylidène.

L'étape b. peut être est réalisée à une température d'environ 80°C et le complexe de ruthénium précurseur ajouté à cette étape peut être de formule 1P : 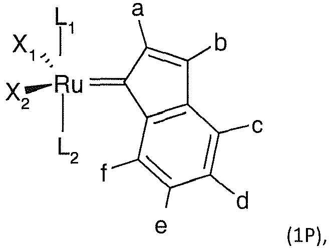 dans laquelle,
X₁ et X₂ sont des ligands anioniques,
L₁ et L₂ sont des ligands non-chargés, préférentiellement de la tricyclohexylphosphine, et
a, b, c, d, e et f sont choisis indépendamment l'un de l'autre dans le groupe constitué d'un atome d'hydrogène, d'un groupement alkyle et d'un groupement hétéroalkyle.

Dans un mode de réalisation, le procédé comprend en outre l'étape d. suivante :
d. former un deuxième mélange réactionnel par la mise en contact du complexe de ruthénium alkylidène isolé à l'étape c. avec un styrényléther.

L'étape b. peut être réalisée pendant une durée d'au moins 3 heures et le complexe ruthénium précurseur peut être de type dit Hoveyda-Grubbs de 1^{ère} génération.

Dans un mode préférentiel de l'invention, le styrényléther est de la formule 4H : 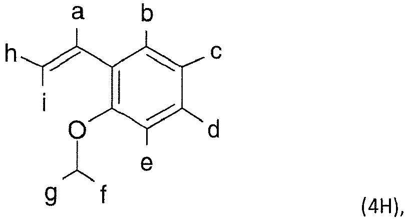 dans laquelle a, b, c, d, e, f, g, i et h sont choisis indépendamment l'un de l'autre dans le groupe constitué d'un atome d'hydrogène, d'un groupement alkyle et d'un groupement hétéroalkyle.

D'autres avantages et caractéristiques de l'invention apparaîtront à la lecture de la description détaillée ci-après et sur les graphiques annexés sur lesquels:
- la figure 1 montre la stabilité d'un complexe de ruthénium alkylidène selon l'invention de formule 1.1 dans le toluène à 60°C ;
- la figure 2 montre l'activité catalytique d'un complexe de ruthénium alkylidène selon l'invention de formule 1.1 à 1mol% en réaction de métathèse cyclisante du diethyl 2-allyl-2-(2-methylallyl)malonate à 30°C ;
- la figure 3 montre l'activité catalytique d'un complexe de ruthénium alkylidène selon l'invention de formule 1.1 à 1mol% en réaction de métathèse cyclisante du diethyl 2-allyl-2-(2-methylallyl)malonate à 60°C;
- la figure 4 montre l'activité catalytique d'un complexe de ruthénium alkylidène selon l'invention de formule 1.1 à 2mol% en réaction de métathèse cyclisante du diethyl 2,2-bis(2-methylallyl)malonate à 80°C ;
- la figure 5 montre l'activité catalytique d'un complexe de ruthénium alkylidène selon l'invention de formule 1.2 à 0,2M en réaction de métathèse cyclisante du diethyl 2,2-bis(2-methylallyl)malonate à 80°C ;
- la figure 6, montre la stabilité d'un complexe de ruthénium alkylidène selon l'invention de formule 2.1 dans le toluène à 60°C ;
- la figure 7, montre l'activité catalytique d'un complexe de ruthénium alkylidène selon l'invention de formule 2.1 à 1mol% en réaction de métathèse cyclisante du diethylallymétallylmalonate à 60°C ;
- la figure 8 montre l'activité catalytique d'un complexe de ruthénium alkylidène selon l'invention de formule 2.1 à 1mol% en réaction de métathèse cyclisante du diethylallymétallylmalonate à 100 °C dans du toluène et dans l'heptane ;
- la figure 9 montre l'activité catalytique d'un complexe de ruthénium alkylidène selon l'invention de formule 2.1 à 1mol% en réaction de métathèse cyclisante du diethylallymétallylmalonate à 120 °C dans de l'octane et dans du diéthylcarbonate ;
- la figure 10 montre l'activité catalytique d'un complexe de ruthénium alkylidène selon l'invention de formule 2.1 à 1mol% en réaction de métathèse cyclisante du diethyl 2,2-bis(2-methylallyl)malonate à 130 °C par ajout successif ;
- la figure 11 montre l'activité catalytique d'un complexe de ruthénium alkylidène selon l'invention de formule 2.2 à 2mol% en réaction de métathèse cyclisante du diethyl 2,2-bis(2-methylallyl)malonate à 80°C ;
- la figure 12 montre la stabilité d'un complexe de ruthénium alkylidène selon l'invention de formule 1.4 dans le toluène à 60°C ;
- la figure 13 montre l'activité catalytique d'un complexe de ruthénium alkylidène selon l'invention de formule 1.4 à 1mol% en réaction de métathèse cyclisantedu diethyl 2-allyl-2-(2-methylallyl)malonate à 35°C ;
- la figure 14 montre l'activité catalytique d'un complexe de ruthénium alkylidène selon l'invention de formule 1.5 à 1mol% en réaction de métathèse cyclisante du diethyl 2-allyl-2-(2-methylallyl)malonate à 30°C;
- figure 15 montre l'activité catalytique d'un complexe de ruthénium alkylidène selon l'invention de formule 1.5 à 1mol% en réaction de métathèse cyclisante (RCM) du diethyl 2-allyl-2-(2-methylallyl)malonate à 60°C ;
- figure 16 montre la stabilité thermique d'un complexe de ruthénium alkylidène selon l'invention de formule 4.1, à 60°C, et à 80°C; et
- la figure 17 montre l'activité catalytique d'un complexe de ruthénium alkylidène selon l'invention de formule 4.1 à 1mol% en réaction de métathèse cyclisante (RCM) du diethyl 2,2-diallylmalonate à 120°C, dans du Xylène (XYL) et dans du diéthylcarbonate (DEC).

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La synthèse d'un complexe de ruthénium alkylidène selon l'invention comprend une étape préalable de synthèse d'un sel d'imidazolium dissymétrique de formule 1S : 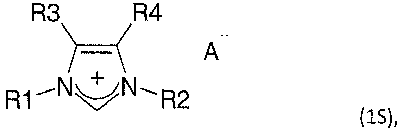 dans laquelle R1 est un groupement aromatique, R2 est choisi parmi un groupement alkyle aliphatique secondaire cyclique, R3 et R4 sont choisis indépendamment l'un de l'autre dans le groupe constitué d'hydrogène, d'halogénure et d'un groupement alkyle, et A- est un anion.

La synthèse de ce sel est réalisé en une seule opération et comprend les étapes suivantes :
a. former un mélange réactionnel par la mise en contact d'un équivalent (1 eq) d'une aniline de formule 2S : 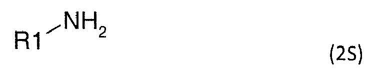 avec un équivalent (1 eq) d'un composé de formule 3S : 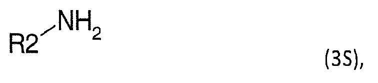 en présence d'au moins quatre virgule cinq équivalents (4,5 eq) d'un acide de Brønsted de formule 4S :

   AH (4S);
b. former une solution comprenant un équivalent (1 eq) d'un dicarbonyle de formule 5S : 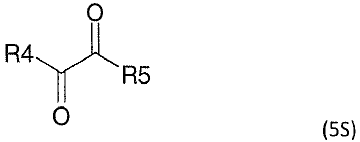 un équivalent (1 eq) de formaldéhyde, et au moins quatre virgule cinq équivalents (4,5 eq) de l'acide de Brønsted de formule 4, porter ladite solution à environ 80°C et y ajouter le mélange réactionnel formé à l'étape a. ;
c. laisser sous agitation pendant au moins 2 heures à environ 80°C ; et
d. isoler le sel d'imidazolium dissymétrique de formule 1S.

Cette synthèse permet donc en une seule opération chimique d'obtenir un sel d'imidazolium 1,3-disubstitué portant un groupement aromatique d'une part, et un groupement cycloalkyle d'autre part.

L'acide de Brønsted de formule 4S peut notamment être l'acide acétique. Ceci fourni un contre ion A- de type acétate.

La sélectivité de la réaction de synthèse du sel d'imidazolium 1,3-disubstitué peut atteindre un ratio de 1/30/1 en faveur du sel d'imidazolium dissymétrique souhaité (plus précisément : 1 partie du premier sel symétrique, 1 partie du deuxième sel d'imidazolium symétrique, et 30 parties du sel d'imidazolium dissymétrique). En effet, les Demanderesses ont découvert que lorsqu'une amine aromatique et une amine aliphatique sont mises en contact dans les conditions décrites ci-dessus, leur différence de réactivité minimise la formation des sels d'imidazolium 1,3-bis-aryliques et 1,3-bis-alkyles qui sont des sous-produits de la réaction résultant d'une réaction d'auto-condensation des amines présentes dans le milieu réactionnel.

Pour rendre le sel d'imidazolium dissymétrique plus stable (voire plus réactif envers les complexes de ruthénium précurseurs notamment), il est prévu de fournir un contre ion A⁻choisi dans le groupe constitué d'un anion tetrafluoroborate, un anion hexafluorophosphate, un anion hexafluoroantimoine, un anion tetrakis[(3,5-trifluorométhyl)phényl]borate et un anion halogénure. Il est donc avantageux de prévoir un échange de contre-ion.

Pour cela, les étapes a. à d. décrites ci-dessus sont suivies des étapes e. à f. ci-dessous :
e. ajouter un équivalent (1eq) d'un sel inorganique et du solvant organique, préférentiellement du dichlorométhane, au sel d'imidazolium dissymétrique isolé à l'étape d. ;
f. laisser sous agitation à température ambiante pendant au moins une heure et réaliser une extraction eau/solvant organique suivi d'une évaporation dudit solvant-organique ;
g. précipiter par un solvant organique polaire, puis isoler le sel d'imidazolium dissymétrique de formule 1B.

Le sel inorganique de l'étape e. est choisi parmi le groupe constitué de tetrafluoroborate de potassium, de tetrafluoroborate de sodium, de tetrafluoroborate de lithium, de tetrafluoroborate d'hydrogène, de tetrafluoroborate d'ammonium, de hexafluorophosphate de potassium, de hexafluorophosphate de sodium, de hexafluorophosphate de lithium, de hexafluorophosphate d'hydrogène, de hexafluorophosphate d'ammonium, d'hexafluoroantimoine d'argent, d'hexafluoroantimoine de potassium, d'hexafluoroantimoine de sodium, d'hexafluoroantimoine de lithium, de tetrakis[(3,5-trifluorométhyl)phényl]borate de potassium, de tetrakis[(3,5-trifluorométhyl)phényl]borate de sodium et de tetrakis[(3,5-trifluorométhyl)phényl]borate de lithium et d'acide halogénique.

Ceci permet d'obtenir un contre-ion A⁻ adéquat.

Selon différents modes de réalisation prévus, R1 est choisi dans le groupe constitué de 2,4,6-triméthylphényle, de 3,5-dinitrophényle, de 2,4,6-tris(trifluorométhyle)phényle, de 2,4,6-trichlorophényle, et de hexafluorophényle ; et R2 est choisi dans le groupe constitué de cyclopentyle, de cyclohexyle, de cycloheptyle, de cyclooctyle, de cyclodecyle, de cyclododecyle, et de cyclopentadecyle. Le choix parmi ces groupements permet une bonne stabilité stérique du sel dans un premier temps, et du complexe de ruthénium dans un deuxième temps, comme on le verra plus loin.

En prenant comme exemple un groupement R1 de 2,4,6-triméthylphényle, un groupement R2 de cyclohexyle et des groupements R3 et R4 d'hydrogène, et en suivant le procédé décrit ci-dessus, on obtient un 1-aryle-3-cycloalkyle-imidazoline-2-ylidene de formule 6S ci-dessous :

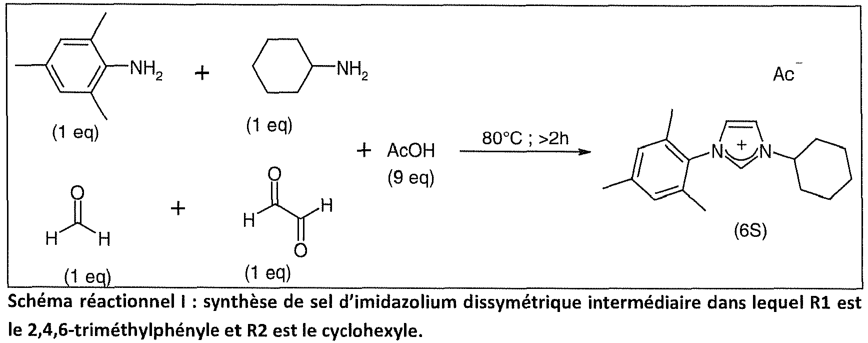

Pour déterminer la sélectivité de la réaction, le milieu réactionnel comprenant le sel 1-aryle-3-cycloalkyle-imidazoline-2-ylidene de formule 6S est refroidi à température ambiante. Ensuite de l'eau est additionnée suivi de solvant (par exemple dans de l'acétate d'éthyle ou du dichlorométhane). La phase aqueuse est extraite (par exemple trois fois) avec le solvant. Les phases organiques sont combinées et séchées sur un sel anionique (par exemple sur du sulfate de magnésium). Ensuite la phase organique est concentrée sous vide. Une analyse par résonance magnétique nucléaire (RMN) du brut réactionnel peut permettre de déterminer la sélectivité de la réaction.

L'échange de l'anion acétate contre un autre anion, afin de rendre le sel plus stable voire plus réactif, peut être réalisé comme suit : le brut réactionnel est dissous dans du solvant (par exemple du dichlorométhane). On ajoute ensuite 1 équivalent du sel inorganique comprenant le contre anion souhaité (par exemple du tetrafluoroborate de potassium pour obtenir un contre anion tetrafluoroborate). Le mélange est ensuite agité à température ambiante pendant quelques heures (par exemple 3h). Ensuite, on réalise une extraction liquide/liquide, à savoir une extraction eau/solvant-organique. Pour cela de l'eau est ajoutée et la phase organique est séparée de la phase aqueuse. La phase aqueuse est lavée (par exemple trois fois) avec du solvant. Chaque phase organique est séchée sur un sel anionique (par exemple sur du sulfate de magnésium), et concentrée sous vide. On obtient généralement une huile marron, à laquelle on ajoute un solvant organique pour une précipitation (par exemple de l'acétate d'éthyle). Ensuite le mélange peut-être soumis à un traitement aux ultrasons pendant quelques minutes (par exemple 5 minutes). Un solide se forme lequel est filtré sur fritté, puis lavé avec du solvant (par exemple avec de l'acétate d'éthyle) pour donner l'imidazolium dissymétrique souhaité avec un anion souhaité (par exemple un anion tetrafluoroborate).

De manière générale, la précipitation ci-dessus par un solvant organique polaire peut se faire en utilisant l'acétate d'éthyle, le diéthylether, ou une cristallisation dans l'éthanol. De préférence, on utilise la précipitation par l'acétate d'éthyle.

Par le protocole opératoire ci-dessus, lequel ne comporte qu'une seule opération chimique, les Demanderesses ont pu synthétiser un grand nombre de sels. Notamment, les Demanderesses ont synthétisé les sels d'imidazolium dissymétrique de formule 7S, 8S, 9S, 10S, 115, 12S, 13S, 14S, 15S, 16S, 17S et 18S:

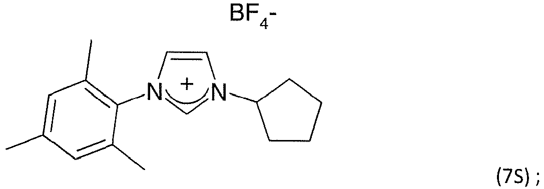

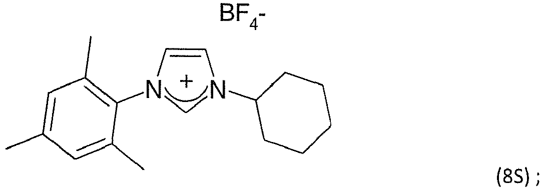

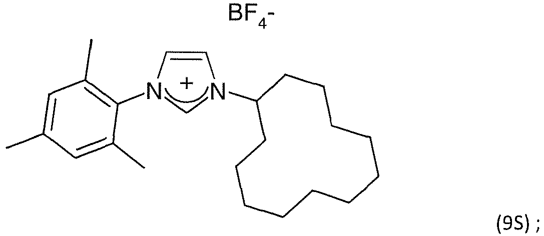

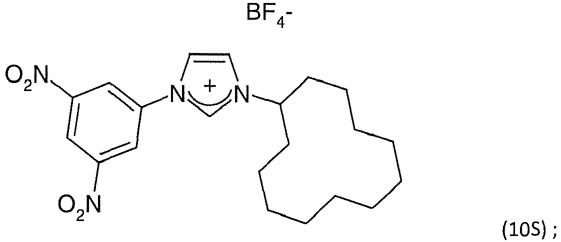

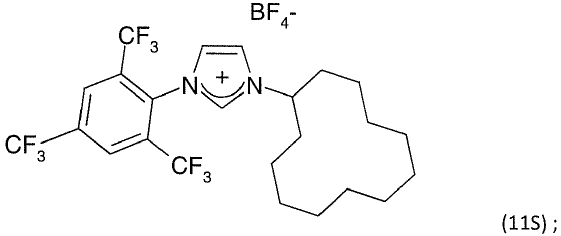

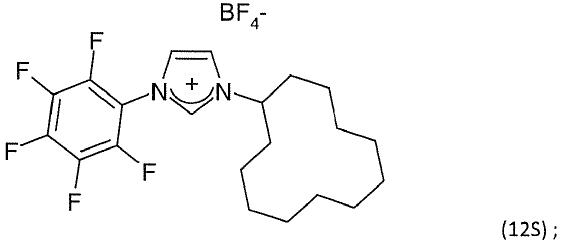

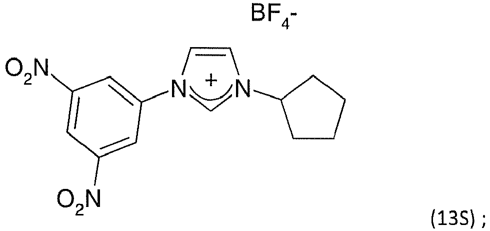

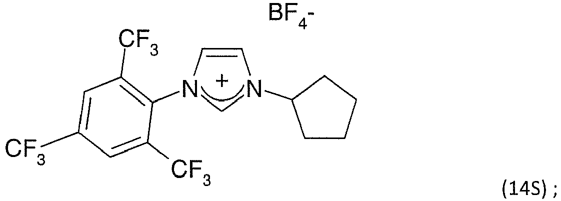

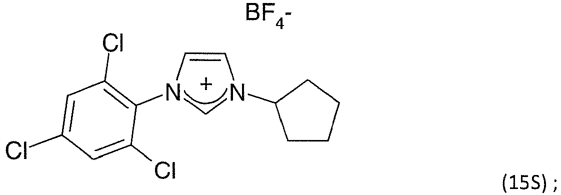

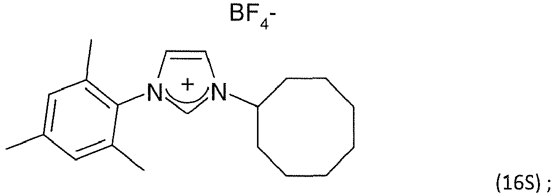

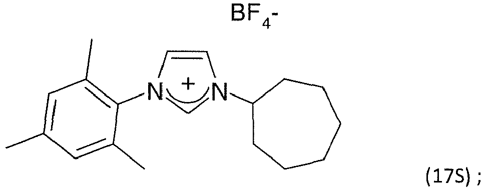

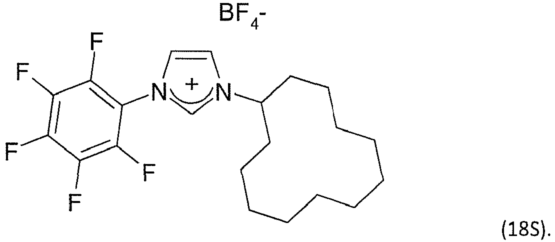

De manière générale les Demanderesses ont synthétisé des sel d'imidazolium dissymétriques de formule 1S 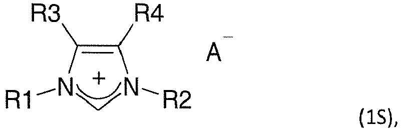 dans laquelle R1 est un groupement aromatique, R2 est un groupement alkyle aliphatique secondaire cyclique, R3 et R4 sont choisis indépendamment l'un de l'autre dans le groupe constitué d'hydrogène, d'halogénure et d'un groupement alkyle, et A- est un anion.

R1 peut notamment être le 2,4,6-triméthylphényle, le 3,5-dinitrophényle, le 2,4,6-tris(trifluorométhyle)phényle, le 2,4,6-trichlorophényle, ou le hexafluorophényle.

R2 peut notamment être le cyclopentyle, le cyclohexyle, le cycloheptyle, le cyclooctyle, le cyclodecyle, le cyclododecyle, ou le cyclopentadecyle.

R3 et R4 peuvent être chacun l'hydrogène. R3 et R4 peuvent aussi être des halogénures (par exemple un atome de chlore ou des halogénures d'alkyle). R3 et R4 peuvent aussi être des groupements alkyles (par exemple méthyle, éthyle, propyle ou isopropyle)

L'anion A⁻ peut notamment être un anion tetrafluoroborate, un anion hexafluorophosphate, un anion acétate, un anion hexafluoroantimoine, un anion tetrakis[(3,5-trifluorométhyl)phényl]borate et un anion halogénure.

Une fois le sel d'imidazolium dissymétrique de formule 1S synthétisé, les complexes de ruthénium selon l'invention peuvent être synthétisés. En effet, le cation du sel d'imidazolium dissymétrique forme le ligand, à savoir le ligand diaminocarbène N-hétérocyclique (NHC), du complexe métallique diaminocarbènique de l'invention (le complexe de ruthénium alkylidène).

Les conditions expérimentales pour la synthèse chimique des complexes de ruthénium alkylidène selon l'invention, peuvent être les conditions classiquement utilisées dans l'état de la technique. Ainsi, l'association des nouveaux ligands diaminocarbène N-hétérocycliques décrits plus haut avec un complexe de ruthénium précurseur, pour former des complexes de ruthénium alkylidène selon l'invention, peut être réalisée dans des conditions expérimentales sensiblement analogues à celles décrites dans les publications scientifiques suivantes :
- Ledoux, N.; Linden, A.; Allaert, B.; Mierde, H. V.; Verpoort, F. Adv. Synth. Catal. 2007; 349: 1692 ;
- Fournier, P.-A.; Collins, S. K. Organometallics 2007, 26, 2945 ;
- Vehlow, K.; Gessler, S.; Blechert, S. Angew Chem Int Ed 2007, 46, 8082 ;
- Chung, C. K.; Grubbs, R. H.; Org Lett. 2008, 10, 2693 ;
auxquelles il convient de se référer à la lecture de la présente description.

Une déprotonation du sel d'imidazolium (1 à 3,5 eq.) par une base forte (par exemple du ter-amylate de potassium ou du hexamethyldisilazane de potassium, également de 1 à 3,5 eq.) sous atmosphère inerte, à température ambiante, et en présence de solvant (toluène par exemple), permet de générer le diaminocarbène N-hétérocyclique libre.

Après trente minutes de réaction, un complexe de ruthénium précurseur (1 eq.) est introduit dans le mélange réactionnel. Ensuite le mélange réactionnel est chauffé à 80°C pendant deux heures. Enfin, une purification sur gel de silice permet de séparer les diverses impuretés du complexe de ruthénium ainsi formé.

Par complexe de ruthénium précurseur on entend un complexe de la formule générale 1P suivante : 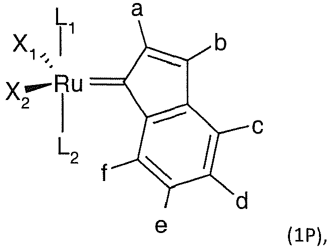 dans laquelle,
X₁ et X₂ sont des ligands anioniques,
L₁ et L₂ sont des ligands non-chargés, préférentiellement de la tricyclohexylphosphine,
et a, b, c, d, e et f sont choisis indépendamment l'un de l'autre dans le groupe constitué d'un atome d'hydrogène, d'un groupement alkyle et d'un groupement hétéroalkyle.

On peut notamment utiliser le complexe de ruthénium précurseur de la série M (par exemple le composé M1) de la société Umicore (marque déposée), de la formule 2P suivante : 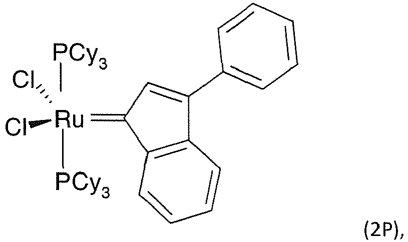 dans laquelle PCy3 représente la tricyclohexylphosphine. II s'agit précisément du bis(tricyclohexylphosphine)-3-phenyl-1H-inden-1-ylideneruthenium(II) dichloride.

Dans d'autres modes de réalisation, d'autres complexes de ruthénium précurseurs peuvent être utilisés, tels que par exemple le complexe dit catalyseur de Grubbs de 1^{ère} Génération ou benzylidène-bis(tricyclohexylphosphine)dichlororuthénium.

Dans ces conditions, le sel d'imidazolium déprotoné réagit avec le complexe de ruthénium précurseur pour former un complexe de ruthénium selon l'invention, à savoir comprenant un ligand 1-aryl-3-cycloalkyl-imidazoline-2-ylidène, dans lequel le groupement cycloalkyle du ligand 1-aryl-3-cycloalkyl-imidazoline-2-ylidène est un alkyle aliphatique secondaire cyclique.

En pratique, le(s) ligand(s) L₁ et/ou L₂ de la formule 1P est/sont substitué(s) par le diaminocarbène N-hétérocyclique libre.

Ainsi, lorsqu'un seul des ligands L₁ ou L₂ est substitué par le diaminocarbène N-hétérocyclique libre, le complexe de l'invention peut être de la formule générale de la formule 1, 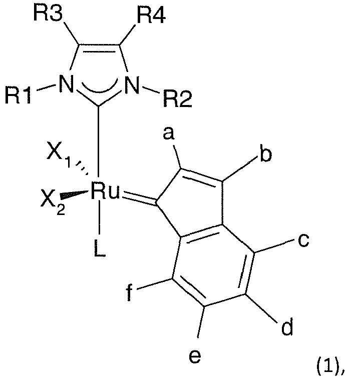 dans laquelle
R₁ est un groupement aromatique,
R2 est un groupement alkyle aliphatique secondaire cyclique,
R3 et R4 sont choisis indépendamment l'un de l'autre dans le groupe constitué d'un atome d'hydrogène, d'halogénure et d'un groupement alkyle,
X₁ et X₂ sont des ligands anioniques,
L est un ligand non-chargé, et
a, b, c, d, e et f sont choisis indépendamment l'un de l'autre dans le groupe constitué d'un atome d'hydrogène, d'un groupement alkyle et d'un groupement hétéroalkyle.

Lorsque les deux ligands L₁ et L₂ sont chacun substitués par le diaminocarbène N-hétérocyclique libre, le complexe de l'invention peut être de la formule générale de la formule 2: 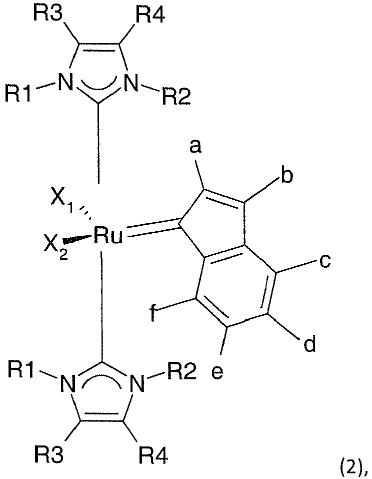 dans laquelle
R1 est un groupement aromatique,
R2 est un groupement alkyle aliphatique secondaire cyclique,
R3 et R4 sont choisis indépendamment l'un de l'autre dans le groupe constitué d'un atome d'hydrogène, d'halogénure et d'un groupement alkyle,
X₁ et X₂ sont des ligands anioniques, et
a, b, c, d, e et f sont choisis indépendamment l'un de l'autre dans le groupe constitué d'un atome d'hydrogène, d'un groupement alkyle et d'un groupement hétéroalkyle.

Généralement on obtient un mélange de complexes de la formule 1 et de la formule 2, et ce dans des proportions en faveur du complexe de la formule 1 lorsque le sel d'imidazolium est utilisé en une quantité d'environ 1 à 1,3 eq., et dans des proportions en faveur du complexe de la formule 2 lorsque le sel d'imidazolium est utilisé en une quantité d'environ 2.2 à 3 eq..

En résumé, les complexes de ruthénium selon l'invention peuvent comprendre un ou deux ligands 1-aryl-3-cycloalkyl-imidazoline-2-ylidene, dans le(s)quel(s) le(s) groupement(s) cycloalkyle(s) de chaque ligand 1-aryl-3-cycloalkyl-imidazoline-2-ylidene est un alkyle aliphatique secondaire cyclique.

Les complexes de ruthénium selon l'invention et comprenant un seul ligand 1-aryl-3-cycloalkyl-imidazoline-2-ylidene (par exemple un composé de la formule 1 ci-dessus ; 1 eq.) peuvent réagir avec des composés de type styrenyléther (environ 1,1 à 1,75 eq.) pour former des complexes de ruthénium dits complexes de ruthénium chélatants. Cette réaction est généralement réalisée en présence d'un acide de Lewis (par exemple du Chlorure de Cuivre I ; 1,1 à 1,6 eq.) et de solvant (par exemple du dichlorométhane), à une température de 35°C pendant une durée d'environ 5 heures.

Le styrényléther peut être de la formule 1H : 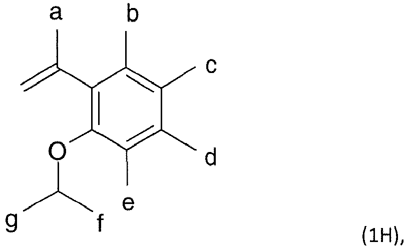 dans laquelle a, b, c, d, e, f et g sont choisis indépendamment l'un de l'autre dans le groupe constitué d'un atome d'hydrogène, d'un groupement alkyle et d'un groupement hétéroalkyle, où f et e forment optionnellement un cycle. De préférence, a, b, c, d et e sont chacun un atome d'hydrogène (H), et f et g sont chacun un groupement méthyle (CH₃).

Par exemple le styrényléther peut être de la formule 2H : 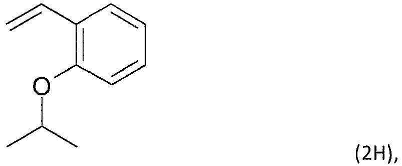 ou de la formule 3H :

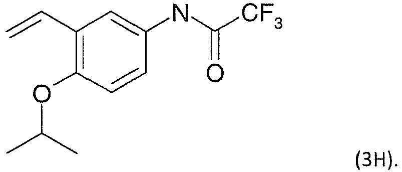

Plus généralement le styrényléther est de la formule 4h : 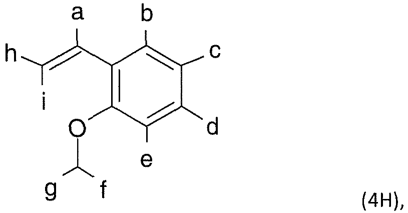 dans laquelle a, b, c, d, e, f, g, h et i sont choisis indépendamment l'un de l'autre dans le groupe constitué d'un atome d'hydrogène, d'un groupement alkyle et d'un groupement hétéroalkyle.

Ainsi, le complexe de ruthénium alkylidène de l'invention peut être de la formule 3 : 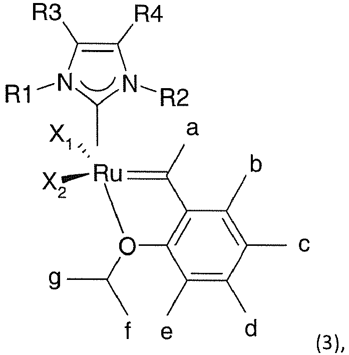 dans laquelle
R1 est un groupement aromatique,
R2 est un groupement alkyle aliphatique secondaire cyclique,
R3 et R4 sont choisis indépendamment l'un de l'autre dans le groupe constitué d'un atome d'hydrogène, d'halogénure et d'un groupement alkyle,
X₁ et X₂ sont des ligands anioniques, et
a, b, c, d, e, f et g sont choisis indépendamment l'un de l'autre dans le groupe constitué d'un atome d'hydrogène, d'un groupement alkyle et d'un groupement hétéroalkyle, où f et e forment optionnellement un cycle.

Dans un mode de réalisation particulier de l'invention et sous conditions choisies, les Demanderesses ont également synthétisé un complexe de ruthénium selon l'invention de forme dite chélatante cationique. Les conditions sont détaillées ci-après.

Une déprotonation du sel d'imidazolium (2,7 à 3,5 eq.) par une base forte (2,7 à 3,5 eq. d'hexamethyldisilazane de potassium) sous atmosphère inerte, à température ambiante, et en présence de solvant (toluène), permet de générer le diaminocarbène N-hétérocyclique libre.

Après trente minutes de réaction, un complexe de ruthénium précurseur (1 eq.) est ajouté au mélange réactionnel. Il s'agit du complexe de ruthénium précurseur de Sigma-Aldrich (marque déposée) dit d'Hoveyda-Grubbs de 1^{ère} génération (en anglais : «*Hoveyda-Grubbs catalyst 1^{st} génération* ») commercialement disponible auprès de la société Sigma-Aldrich Co.. Ce complexe de ruthénium précurseur est le dichloro(o-isopropoxyphenylméthylène)(tricyclohexylphosphine)ruthénium(II). Le mélange obtenu est laissé en réaction à une température d'environ 40°C pendant une durée d'environ 2 heures.

En procédant ainsi, le complexe de ruthénium alkylidène de l'invention peut être de la formule 4: 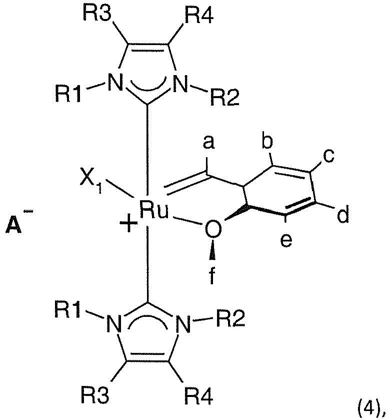 dans laquelle
R1 est un groupement aromatique,
R2 est un groupement alkyle aliphatique secondaire cyclique,
R3 et R4 sont choisis indépendamment l'un de l'autre dans le groupe constitué d'un atome d'hydrogène, d'halogénure et d'un groupement alkyle,
a, b, c, d, e et f sont choisis indépendamment l'un de l'autre dans le groupe constitué d'un atome d'hydrogène, d'un groupement alkyle et d'un groupement hétéroalkyle,
X₁ est un ligand anionique, et
A⁻ est un anion.

X₁ peut être un halogène (par exemple le Chlore) et A⁻ peut notamment être un anion tetrafluoroborate, un anion hexafluorophosphate, un anion acétate, un anion hexafluoroantimoine, un anion tetrakis(pentafluorophényl)borate et un anion halogénure.

### EXEMPLES DE RÉALISATION

Dans les exemples ci-après, les spectres de RMN ¹H (400MHz), ¹³C (125MHz), ³¹P (162MHz), ¹¹B (128MHz) et ¹⁹F (376 MHz) ont été réalisés sur un spectromètre à transformée de Fourier Brucker ARX 400 avec découplage du proton pour tous les noyaux excepté ¹H. Les déplacements chimiques (δ) sont exprimés en partie par million (ppm), dans le solvant deutérié indiqué. Les abréviations suivantes ont été utilisées pour désigner la multiplicité des signaux s (singulet), d (doublet), t (triplet), q (quadruplet), quin. (quintuplet), sept. (septuplet), m (multiplet), bs (singulet large).

Par ailleurs, le toluène est séché sur colonne desséchante et replacé sur tamis moléculaire 4Å avant d'être dégazé. Le dichlorométhane est distillé sur hydrure de calcium.

Les chromatographies analytiques sur couches minces ont été réalisées sur plaques Merck 60F254, en aluminium recouvertes de silice, en utilisant la lumière UV à 254 nm ou une solution de KMnO₄ à 3% comme révélateur. Les purifications par chromatographie sur colonne ont été réalisées avec du gel de silice de type Merck (marque déposée) 9385 (230-400 mesh).

### A. SYNTHÈSE DE SELS 1-ARYL-3-CYCLOALKYL-IMIDAZOLIUM - BF₄⁻ :

Dans un ballon on place de l'aniline (mesitylamine, 40mmoles, 1eq) et la cycloalkylamine (40mmoles, 1eq). Puis de l'acide acétique (10mL, 18mmoles, 4.5 eq) est additionné lentement. Le mélange est ensuite laissé sous agitation pendant 5 minutes.

Dans un ballon sont placé du glyoxal (4.6mL, 40 mmoles, 1eq), du formol (3.0 mL, 40 mmoles, 1 eq) et de l'acide acétique (lOmL, 18 mmoles, 4.5 eq), puis le mélange est chauffé à 80°C. À cette solution est ensuite ajouté, goutte à goutte, le mélange d'amines préalablement préparé, puis le milieu est laissé à 80°C pendant le temps imparti (de 2h à 14h).

Une fois que la réaction est terminée, le milieu réactionnel est refroidi à température ambiante puis de l'eau (20mL) est additionnée, suivi de 40mL de l'acétate d'éthyle (AcOEt). La phase aqueuse est extraite trois fois avec 20mL de l'acétate d'éthyle (AcOEt) puis les phases organiques sont combinées et séchées sur du sulfate de magnésium (MgSO₄), et concentrée sous vide. L'analyse par résonance magnétique nucléaire (RMN) du brut réactionnel permet de déterminer la sélectivité de la réaction.

Le brut réactionnel est ensuite dissous dans 70 mL de dichlorométhane (CH₂Cl₂) puis 5.15 g de tetrafluoroborate de potassium (KBF₄) (40 mmoles, 1 eq) sont ensuite ajoutés. Le mélange est ensuite agité à température ambiante pendant 3h. Ensuite, on réalise une extraction liquide/liquide, à savoir une extraction eau/solvant-organique (ici H₂O/CH₂Cl₂). Pour cela, 20mL d'eau sont ajouté, les phases sont séparées, la phase aqueuse est lavée trois fois avec 20mL de dichlorométhane (CH₂Cl₂). Les phases organiques sont ensuite combinées, séchées sur sulfate de magnésium (MgSO₄), et concentrées sous vide. À l'huile marron résultante est ensuite ajouté 40mL d'acétate d'éthyle (AcOEt) puis le mélange est soumis aux ultrasons pendant 5 minutes. Un solide se forme lequel est filtré sur fritté, puis lavé avec de l'acétate d'éthyle (AcOEt) pour donner l'imidazolium 1-aryl-3-cycloalkyl souhaité.

Chaque sel d'imidazolium 1-aryl-3-cycloalkyl souhaité a été soumis à une analyse RMN et a été confirmé par analyse cristallographique. Des données d'analyse RMN de deux sels d'imidazolium 1-aryl-3-cycloalkyl souhaités sont fournies ci-après.

### A1. 5-CYCLOPENTYL -2-MESITYL-IMIDAZOLIUM TETRAFLUOROBORATE

| | |
|---|---|
| 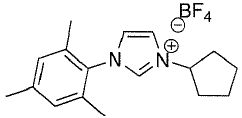 | Formule brute : C₁₇H₂₃BF₄N₂ |
| | M = 342.18 g/mol |
| | Rendement : 35% |

L'utilisation de la procédure générale pour la préparation d'imidazolium dissymétrique avec 3.41g (40 mmoles) de cyclopentylamine et 5.6mL de mésitylamine (40 mmoles) conduit à 4.80 g (14 mmoles, 35%) d'imidazolium dissymétrique sous la forme d'un solide blanc.

**Sélectivité de la réaction :**

| | | |
|---|---|---|
| 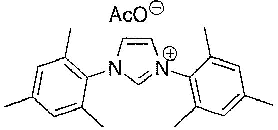 | 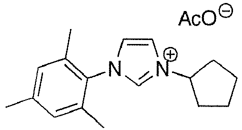 | 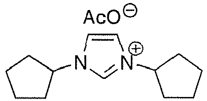 |
| 1 partie | 28.2 parties | 1.1 partie |

¹H (400MHz, CDCl₃) : 8,82 (t, *J* = 1,73Hz, 1Hᵢₘ) ; 7,70 (t, *J* = 1,7Hz, 1Hᵢₘ) ; 7,24 (t, *J* = 1,7 Hz, 1Hᵢₘ) ; 6,97 (s, 2Hₐᵣ) ; 5,03 (q, *J* = 7,5Hz, 1H) ; 2,42 (m, 2H) ; 2,32 (s, 3Hₘₑₛ); 2,00 (s, 6Hₘₑₛ); 1,92 (m, 4H); 1,77 (m, 2H)
¹³C (125 MHz, CDCl₃) : 141.31 ; 136.6; 134.4 (2Cₘₑₛ); 130.8 ; 129.9 (2Cₘₑₛ) ; 124.3 (Cᵢₘ); 121.4(Cᵢₘ); 62.0; 35.6 (2C); 24.0 (2C); 21.2; 17.3 (2Cₘₑₛ)
¹⁹F (376 MHz, CDCl₃) : -151.98 / -152,0 (s)
¹¹B (138 MHz, CDCl₃) : -1.033 (s, BF₄)
Tf (température de fusion) : 96°C
HRMS (spectrospcopie de masse haute resolution) [M⁺] :

| | |
|---|---|
| Calculée : 255.18612 | Trouvée 255.1861. |

### A2. 5-CYCLODODECYL-2-MESITYL-IMIDAZOLIUM TETRAFLUOROBORATE

| | |
|---|---|
| 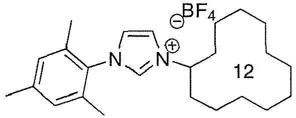 | Formule brute : C₂₄H₃₇BF₄N₂ |
| | M = 440.37 g/mol |
| | Rendement : 62% |

L'utilisation de la procédure générale pour la préparation d'imidazolium dissymétrique avec 7.6 mL (40 mmoles) de cyclododecylamine et 5.6 mL de mésitylamine (40 mmoles) conduit à 10.90 g (24.8 mmoles, 62%) d'imidazolium dissymétrique sous la forme d'un solide blanc.

Sélectivité de la réaction :

| | | |
|---|---|---|
| 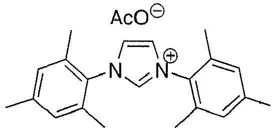 | 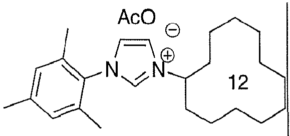 | 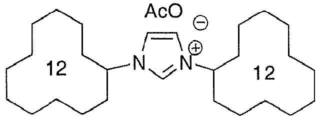 |
| 1 partie | 30 parties | 1 partie |

¹H (400MHz, CDCl₃) : 8.86 (t, *J* = 1,8Hz, 1Hᵢₘ) ; 7.73 (t, *J* = 1,8Hz, 1Hᵢₘ) ; 7.27 (t, *J* = 1,8 Hz, 1Hᵢₘ) ; 6.96 (s, 2Hₐᵣ) ; 4.74 (m, 1H) ; 2.31 (s, 3Hₘₑₛ); 2.11 (m, 2H); 2.00 (s, 6Hₘₑₛ); 1.83 (m, 2H); 1.40 (m, 18H)
¹³C (125 MHz, CDCl₃) : 141.1 ; 135.9; 134.4 (2Cₘₑₛ) ; 130.9; 129.8 (2Cₘₑₛ) ; 124.2 (Cᵢₘ); 121.9(Cᵢₘ); 59.4; 30.2 (2C); 23.7 ;23.4 (2C) ;23.35(2C) ;23.3(2C) ;21.4(2C) ; 21.2; 17.2 (2Cₘₑₛ)
¹⁹F (376 MHz, CDCl₃) : -151.4 / -151,6 (s)
¹¹B (138 MHz, CDCl₃) : -1.033 (s, BF₄)
Tf : 177°C

| | | |
|---|---|---|
| HRMS [M⁺]: | Calculée : 353.29567 | Trouvée 353.2956. |

### B. SYNTHESE DE COMPLEXES DE RUTHENIUM PORTANT UN LIGAND 1-ARYL-3-CYCLOALKYLE-IMIDAZOLINE-2-YLIDENE

De manière générale, on pèse du sel d'imidazolium (1,2 à 1,3 eq.) dans un ballon de *Schlenk* en boite à gant. Puis on ajoute environ du toluène (par exemple environ 7 mL) suivis de *ter-*amylate de potassium (1,2 à 1,3 eq. ; par exemple environ 0,70 mL). Le mélange est ensuite laissé sous agitation pendant 30 minutes. Ensuite le complexe de ruthénium précurseur M1 Umicore (Marque déposée) est ajouté (1 eq. ; par exemple environ 0.923 g). Le ballon de *Schlenk* est ensuite fermé, puis placé à 80°C en dehors de la boîte à gant. Après 3h de réaction, le milieu réactionnel est concentré sous vide puis purifié par colonne sur gel de silice pour isoler les complexes de ruthénium visés.

### B.1. Synthèse d'un complexe de ruthénium (portant un ligand) à partir d'un sel d'imidazolium 1-mésityl-3-cyclododecyl de BF₄⁻.

Une déprotonation du sel d'imidazolium 1-mésityl-3-cyclododecyl de BF₄⁻ de formule 9S (1,227 g ; 2,79mmol ; 1,28 eq.) par du ter-amylate de potassium (1,65 mL; 2,80 mmol ; 1,1 eq.), sous atmosphère inerte, à température ambiante (t.a.), et en présence de toluène (14 mL), permet de générer le diaminocarbène N-hétérocyclique libre.

Après trente minutes (30 min) de réaction, le complexe de ruthénium précurseur (2,02 g; 2,17 mmol; 1 eq.) M1 Umicore (Marque déposée) de formule 2P est introduit dans le mélange réactionnel. Ensuite le mélange réactionnel est chauffé à 80°C pendant deux heures. Enfin, une purification sur gel de silice permet de séparer les diverses impuretés du complexe de ruthénium ainsi formé.

On obtient majoritairement (1,352 g; 1,36 mmol; 62%) le complexe de ruthénium alkylidène de formule 1.1 : 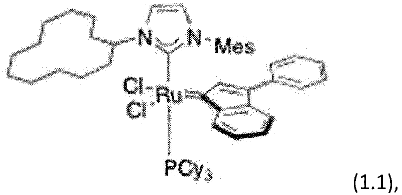 dans laquelle, PCy₃ représente la tricyclohexylphosphine, Mes représente le groupement mésityle.

### RMN:

¹H (400MHz, CDCl₃) : 8.36 (d*, J* = 7.5Hz), 7.72 (m, 2Har) ; 7.50 (m, 1Har) ; 7.40 (m, 2Har) ; 7.23 (m, 3Har) ; 7.15 (m, 2Har) ; 7.06 (m, 1Har); 6.7 (d, *J*=2Hz, 1H); 6.44 (s, 1H) ; 6.01 (s, 1H) ; 5.88 (m; 1H_{C12}) ; 2,50-1.12 (m, 64H).

³¹P (162 MHz, CDCl₃) : 29.06.

Toutefois, on obtient aussi minoritairement (13%) le complexe de ruthénium alkylidène de formule 2.1 : 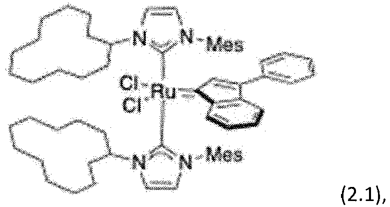 dans laquelle, Mes représente le groupement mésityle.

Le schéma réactionnel est représenté ci-après :

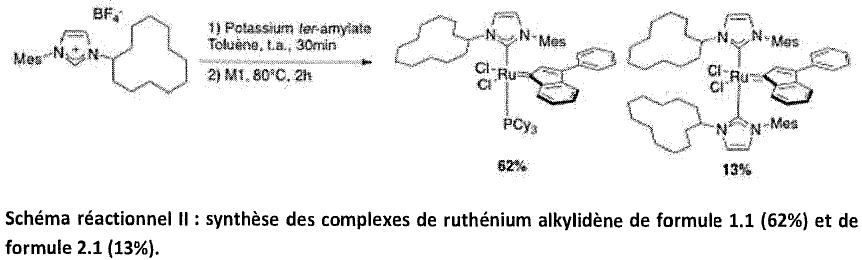

Dans ce schéma réactionnel, PCy₃ représente la tricyclohexylphosphine, Mes représente le groupement mésityle.

Le schéma montre que le produit majoritairement obtenu, avec un rendement de 62% est le complexe de ruthénium alkylidène de formule 1.1, et que le produit minoritairement obtenu, avec un rendement de 13% est le complexe de ruthénium alkylidène de formule 2.1.

Le complexe de ruthénium alkylidène de formule 1.1 a été isolé pour être soumis à diverses études.

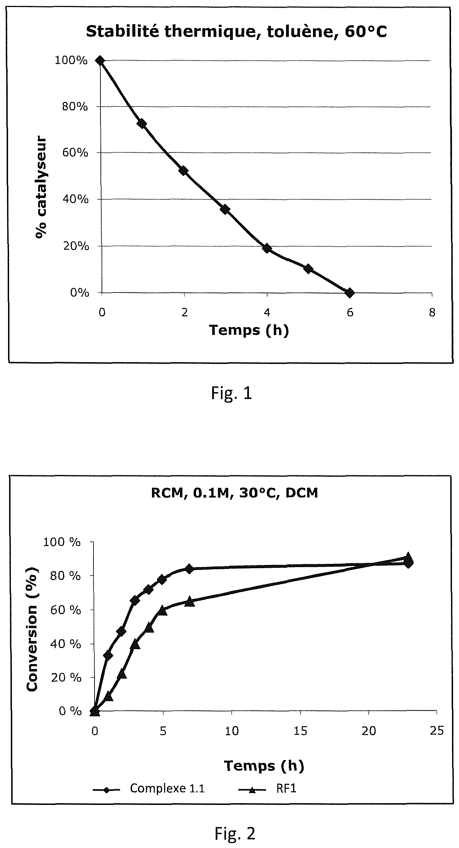

Ainsi, la figure 1 montre la stabilité du complexe de ruthénium alkylidène de formule 1.1 dans le toluène à 60°C.

La figure 2 montre l'activité catalytique du complexe de formule 1.1 à 1mol% en réaction de métathèse cyclisante (RCM) du diethyl 2-allyl-2-(2-methylallyl)malonate à 30°C, dans du dichlorométhane (DCM, CH₂Cl₂). Le schéma réactionnel de cette RCM est représenté ci-après :

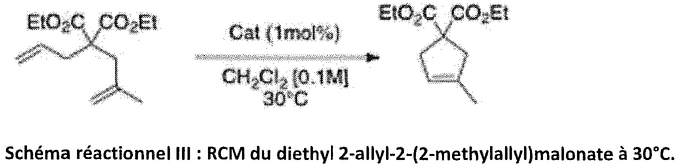

La figure 2 montre également l'activité catalytique d'un catalyseur disponible dans le commerce sous le nom de RF1 catMETium (marque déposée) de la société Evonik Degussa GmbH. Il s'agit d'un catalyseur portant un ligand symétrique de type 1,3-bis-(2,4,6-mésityl)imidazole (aussi appelé : 1,3-bis-(2,4,6-trimethylphenyl)imidazol)). Précisément il s'agit du catalyseur 1,3-bis-(2,4,6-trimethylphenyl)imidazol-2-ylidene)(tricyclohexylphosphine)(3-phenylinden-1-ylidene)ruthenium(II)dichloride.

L'activité catalytique du complexe selon l'invention est plus élevée que celle du catalyseur disponible commercialement.

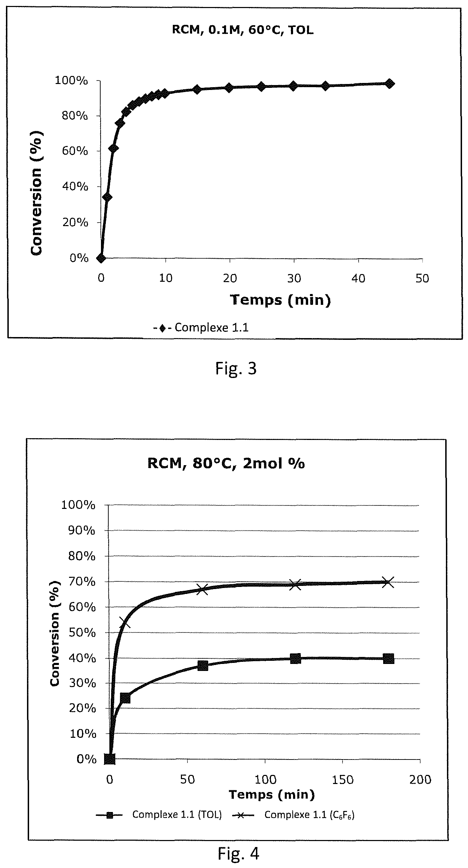

La figure 3 montre l'activité catalytique du complexe de formule 1.1 à 1mol% en réaction de métathèse cyclisante (RCM) du diethyl 2-allyl-2-(2-methylallyl)malonate à 60°C, dans du toluène (TOL). Le schéma réactionnel de cette RCM est représenté ci-après :

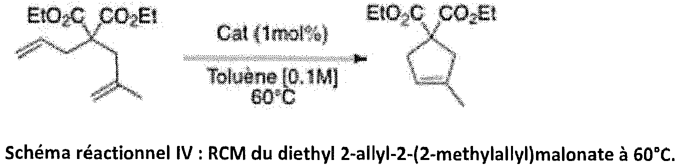

La figure 4 montre l'activité catalytique du complexe de formule 1.1 à 2mol% en réaction de métathèse cyclisante du diethyl 2,2-bis(2-methylallyl)malonate à 80°C, sous micro-ondes à 200W dans du toluène (TOL) et dans du hexafluorobenzène (C₆F₆). Le schéma réactionnel de cette RCM est représenté ci-après :

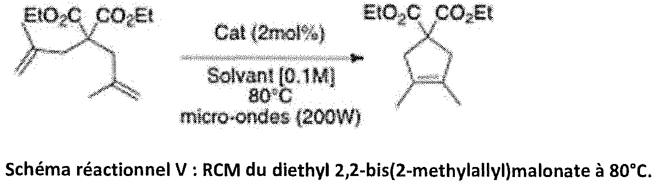

**B.2.** Synthèse d'un complexe de ruthénium (portant un ligand) à partir d'un sel d'imidazolium 1-mésityl-3-cyclopentyl de BF₄⁻.

Une déprotonation du sel d'imidazolium 1-mésityl-3-cyclopentyl de BF₄⁻ de formule 7S (0,487 g ; 1,42 mmol ; 1,3 eq.) par du ter-amylate de potassium (0,82 mL ; 1,39 mmol ; 1,25 eq.), sous atmosphère inerte, à température ambiante (t.a.), et en présence de toluène, permet de générer le diaminocarbène N-hétérocyclique libre.

Après trente minutes de réaction, le complexe de ruthénium précurseur (1,03 g ; 1,11 mmol ; 1 eq.) M1 Umicore (Marque déposée) de formule 2P est introduit dans le mélange réactionnel. Ensuite le mélange réactionnel est chauffé à 80°C pendant deux heures. Enfin, une purification sur gel de silice permet de séparer les diverses impuretés du complexe de ruthénium ainsi formé.

On obtient majoritairement (0,435 g; 0,48 mmol; 43%) le complexe de ruthénium alkylidène de formule 1.2 : 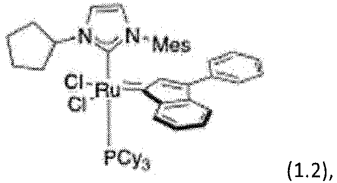 dans laquelle, PCy₃ représente la tricyclohexylphosphine et Mes représente le groupement mésityle.

### RMN:

¹H (400MHz, CDCl₃) : 8.35 (d, *J*= 7Hz, 1H); 7.73 (m, 2H); 7.50 (m, 1H); 7.40 (m, 2H); 7.22 (m, 2H); 7.15 (m, 2H); 7.07 (m, 1H); 6.76 (d, *J* = 2Hz, 1H); 6.44 (s, 1H); 6.03 (m, 2H); 2.27 (m, 2H); 2.35 (m, 3H); 2.03 (m, 4H); 1.89 (m, 9H); 1.77-1.11 (m, 33H).

¹³C (100 MHz, CDCl₃) : 290.8; 186.2 ; 143.5; 140.2; 137.5; 137.4; 136.4; 136.3; 136.25; 136.0; 134.7; 128.9; 128.3; 128.0; 127.5; 127.2; 127.0; 126.5; 126.0; 125.95; 124.2; 119.9; 115.1; 59.0; 30.1; 26.7; 26.4; 22.8; 22.4; 21.0; 20.6; 20.5; 18.5; 18.4.

³¹P (162 MHz, CDCl₃) : 29.69

Toutefois, on obtient aussi minoritairement (12%) le complexe de ruthénium alkylidène de formule 2.2 : 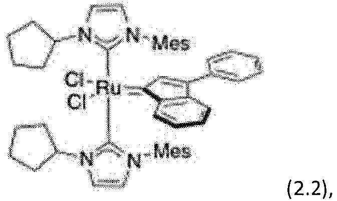 dans laquelle, Mes représente le groupement mésityle.

Le schéma réactionnel est représenté ci-après :

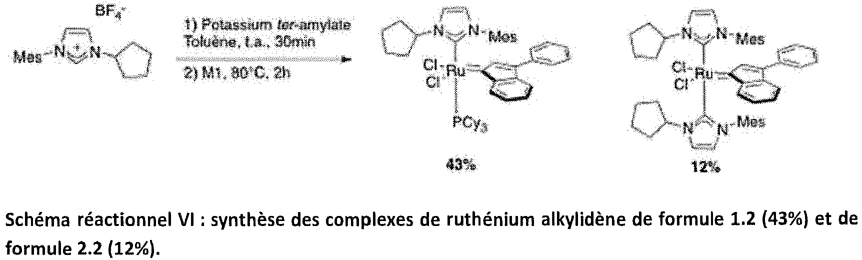

Dans ce schéma réactionnel, PCy₃ représente la tricyclohexylphosphine et Mes représente le groupement mésityle.

Le schéma montre que le produit majoritairement obtenu, avec un rendement de 43% est le complexe de ruthénium alkylidène de formule 1.2, et que le produit minoritairement obtenu, avec un rendement de 12% est le complexe de ruthénium alkylidène de formule 2.2.

Le complexe de ruthénium alkylidène de formule 1.2 a été isolé pour être soumis à diverses études.

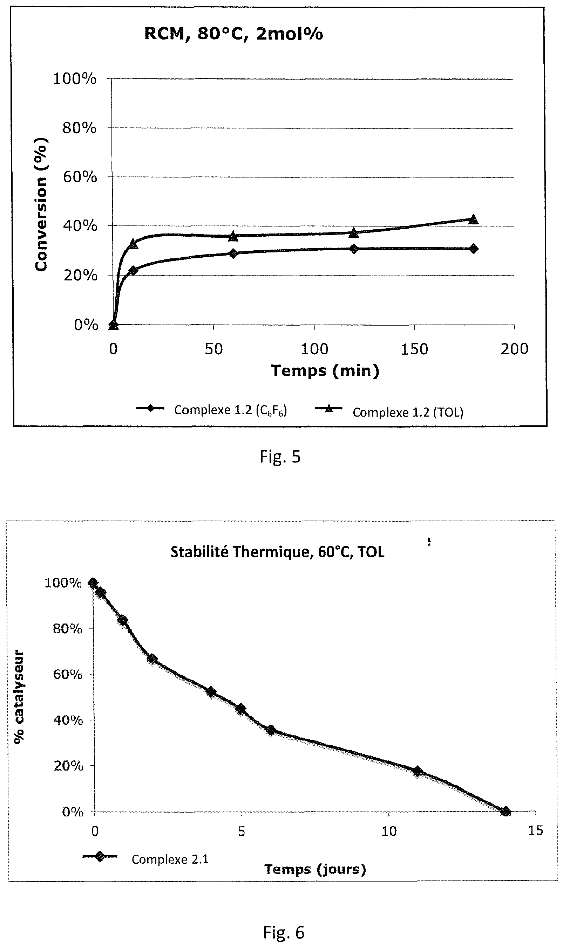

Ainsi, la figure 5 montre l'activité catalytique du complexe de formule 1.2 à 0,2M en réaction de métathèse cyclisante du diethyl 2,2-bis(2-methylallyl)malonate à 80°C, sous micro-ondes à 200W dans du toluène (TOL) et dans du hexafluorobenzène (C₆F₆) selon le schéma réactionnel V.

### C. SYNTHESE DE COMPLEXES DE RUTHENIUM PORTANT DEUX LIGANDS 1-ARYL-3-CYCLOALKYLE-IMIDAZOLINE-2-YLIDENE

De manière générale, on pèse du sel d'imidazolium (environ 3 mmol ; environ 3 eq.) dans un ballon de *Schlenk* en boite à gant. Puis on ajoute du toluène (par exemple environ 0.6 mL) suivis d'hexamethyldisilazane de potassium (0,5M ; 3 mmol, 3 eq. ; par exemple environ 6 mL). Le mélange est ensuite laissé sous agitation pendant 30 minutes. Ensuite le complexe de ruthénium précurseur M1 Umicore (Marque déposée) est ajouté (1 eq. ; 1mmol ; par exemple 0.92 g). Le ballon de *Schlenk* est ensuite fermé, puis placé à 40°C en dehors de la boîte à gant. Après 2h de réaction, le milieu réactionnel est concentré sous vide puis purifié par colonne sur gel de silice pour pour isoler les complexes de ruthénium visés.

### C.1. Synthèse d'un complexe de ruthénium (portant 2 ligands) à partir d'un sel d'imidazolium 1-mésityl-3-cyclododecyl de BF₄⁻.

Une déprotonation du sel d'imidazolium 1-mésityl-3-cyclododecyl de BF₄⁻ de formule 9S (2,2 eq.) par du hexaméthyldisilazane de potassium (KHMDS, 1,1 eq.), sous atmosphère inerte, à température ambiante (t.a.), et en présence de toluène, permet de générer le diaminocarbène N-hétérocyclique libre.

Après trente minutes de réaction, le complexe de ruthénium précurseur (1 eq.) M1 Umicore (Marque déposée) de formule 2P est introduit dans le mélange réactionnel. Ensuite le mélange réactionnel est chauffé à 80°C pendant deux heures. Enfin, une purification sur gel de silice permet de séparer les diverses impuretés du complexe de ruthénium ainsi formé.

On obtient le complexe de ruthénium alkylidène de formule 2.1 (avec un rendement de 65%) : 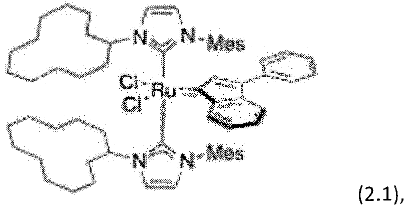 dans laquelle, Mes représente le groupement mésityle.

Le schéma réactionnel est représenté ci-après :

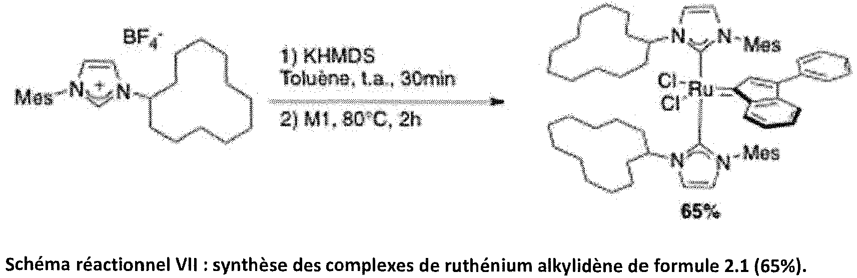

Dans ce schéma réactionnel, Mes représente le groupement mésityle.

Le schéma montre que le produit obtenu, avec un rendement de 65% est le complexe de ruthénium alkylidène de formule 2.1.

Le complexe de ruthénium alkylidène de formule 2.1 a été isolé pour être soumis à diverses études.

Ainsi, la figure 6, montre la stabilité du complexe de ruthénium alkylidène de formule 2.1 dans le toluène à 60°C.

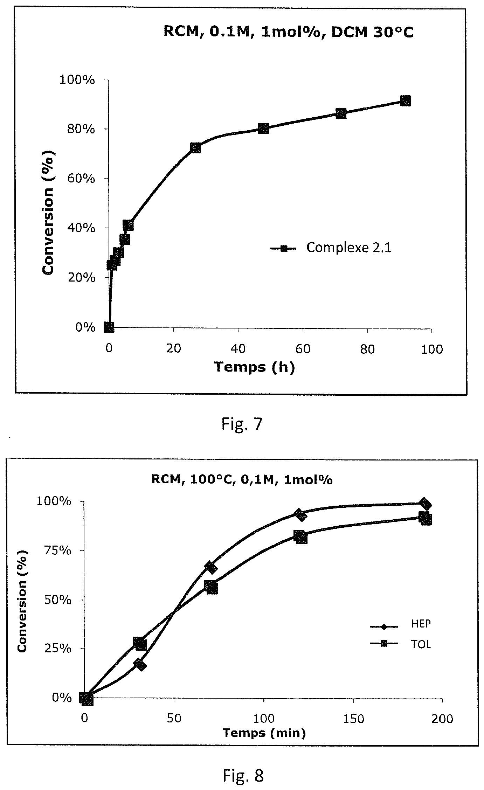

La figure 7, montre l'activité l'activité catalytique du complexe de formule 2.1 à 1mol% en réaction de métathèse cyclisante du diethyl 2-allyl-2-(2-methylallyl)malonate à 60°C, sous micro-ondes à 200W, dans du toluène, selon le schéma réactionnel IV.

L'activité a également été mesurée pour cette même RCM, mais à une température de 100°C, et avec des solvants distincts. La figure 8 montre cette réaction à 100 °C dans du toluène (TOL) et dans de l'heptane (HEP). L'activité catalytique dans ces conditions est supérieure lorsque le solvant est l'heptane.

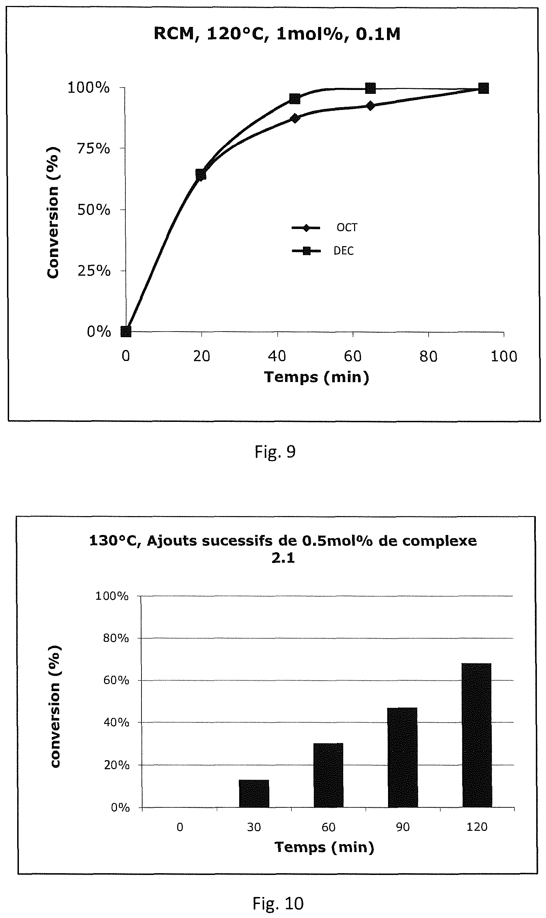

Par ailleurs, l'activité a été mesurée pour cette même RCM, mais à une température de 120°C, et avec des solvants distincts. La figure 9 montre cette réaction à 120 °C dans de l'octane (OCT) et dans du diéthylcarbonate (DEC).

L'activité du complexe de ruthénium de formule 2.1 a aussi été analysée pour la réaction de métathèse cyclisante du diethyl 2,2-bis(2-methylallyl)malonate représenté sur le schéma réactionnel V, mais avec une température de 130°C et par opérations d'ajout successifs de 0.5mol% de catalyseur (complexe de formule 2.1) pour arriver à une quantité finale de 2mol%. Le résultat est représenté sur la figure 10. Dans ces conditions, on atteint une conversion d'environ 70%.

D'autre part le rendement a pu être augmenté dans d'autres conditions expérimentales. Une déprotonation du sel d'imidazolium 1-mésityl-3-cyclododecyl de BF₄⁻ de formule 9S (1,76 g; 4,0 mmol; 2,76 eq.) par du hexaméthyldisilazane de potassium (KHMDS) (8 mL; 0,5M ; 4,0 mmol ; 2,76 eq.), sous atmosphère inerte, à température ambiante (t.a.), et en présence de toluène anhydre (3,5 mL), permet de générer le diaminocarbène N-hétérocyclique libre.

Après trente minutes de réaction, le complexe de ruthénium précurseur (1,34 g ; 1,45 mmol ; 1 eq.) M1 Umicore (Marque déposée) de formule 2P est introduit dans le mélange réactionnel. Ensuite le mélange réactionnel est chauffé à 40°C pendant trois heures. Enfin, une purification sur gel de silice permet de séparer les diverses impuretés du complexe de ruthénium ainsi formé. On a pu isoler 1,315 g (1,23 mmol ; 85%) de complexe de formule 2.1.

### RMN:

¹H (400MHz, CDCl₃) : 8.11 (d, J = 7.5 Hz, 1H); 7.71 (m, 2H); 7.52 (m, 1H); 7.40 (m, 2H); 7.19 (d, J = 1.7Hz, 2H); 7.12 (m; 1H); 7.01 (m, 1H); 6.90 (m, 2H); 6.60 (d, J = 1.7 Hz, 2H); 6.22 (m, 4H); 5.83 (bs, 2H); 2.43 (m, 4H); 2.20 (m, 4H); 1.91 (m, 4H); 1.76 (m, 10H); 1.61-1.43 (m, 40H).

¹³C (100 MHz, CDCl₃) : 140.2; 137.4; 136.4; 136.3; 136.0; 128.9; 128.3; 128.0; 127.6; 127.3; 127.0; 126.5; 126.0; 124.2; 119.8; 115.1; 59.0; 30.1; 26.7; 26.4; 22.8; 22.4; 21.0; 20.6; 18.5; 18.4.

### C.2. Synthèse d'un complexe de ruthénium (portant deux ligands) à partir d'un sel d'imidazolium 1-mésityl-3-cyclopentyl de BF₄⁻.

Une déprotonation du sel d'imidazolium 1-mésityl-3-cyclopentyl de BF₄⁻ de formule 7S (1,423 g ; 4,16 mmol ; 2,95 eq.) par du hexaméthyldisilazane de potassium (8,2 mL; 0,5M ; 4,1 mmol ; 2,95 eq.), sous atmosphère inerte, à température ambiante, et en présence de toluène anhydre (3,5 mL), permet de générer le diaminocarbène N-hétérocyclique libre.

Après trente minutes de réaction, le complexe de ruthénium précurseur (1 eq.) M1 Umicore (Marque déposée) de formule 2P est introduit dans le mélange réactionnel. Ensuite le mélange réactionnel est chauffé à 80°C pendant deux heures (ou à 40°C pendant trois heures). Enfin, une purification sur gel de silice permet de séparer les diverses impuretés du complexe de ruthénium ainsi formé.

On obtient (658 mg ; 0,75 mmol ; 53%) du complexe de ruthénium alkylidène de formule 2.2 : 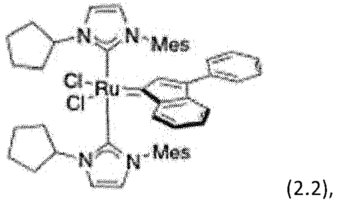 dans laquelle, Mes représente le groupement mésityle, et Ind représente le groupement 3-phényl-indénylidène.

Le schéma réactionnel est représenté ci-après :

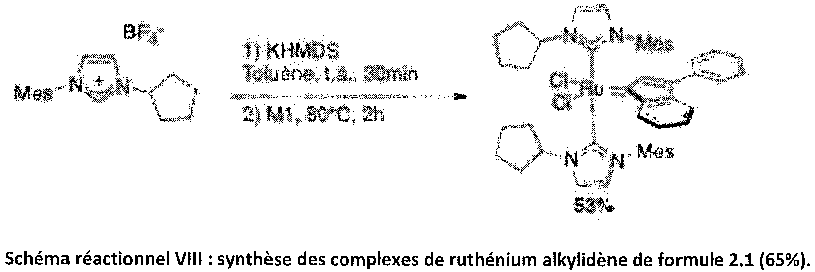

Dans ce schéma réactionnel, Mes représente le groupement mésityle.

Le schéma montre que le produit obtenu, avec un rendement de 53% est le complexe de ruthénium alkylidène de formule 2.2.

### RMN:

¹H (400MHz, CDCl₃) : 8.11 (m, 1H) ; 7.85 (m, 1H) ; 7.72 (d, *J* = 7.5Hz, 2H) ; 7.45 (m, 3H) ; 7.20 (m, 4H) ; 7.06 (m, 2H) ; 6.88 (m, 2H) ; 6.66 (m, 2H) ; 6.51 (m, 2H) ; 6.26 (bs, 2H) : 5.85 (bs, 1H) ; 2.69 (bs, 4H) ; 2.58 (bs, 2H) ; 2.42 (s, 3H) ; 2.05 (m, 8H) ; 1.77 (s, 9H) ; 1.56 (s, 6H) ; 1.51 (m, 2H).

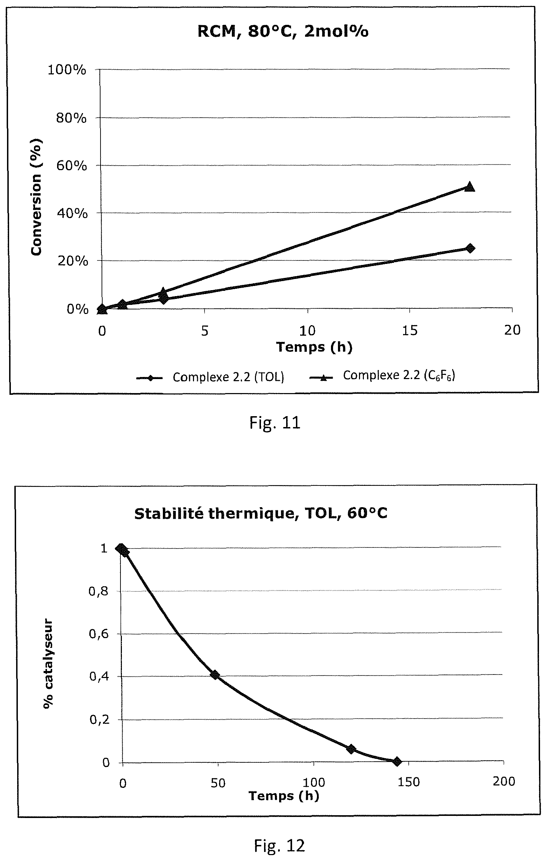

Le complexe de ruthénium alkylidène de formule 2.2 a été isolé pour être soumis à une étude d'activité. Ainsi, la figure 11 montre l'activité catalytique du complexe de formule 2.2 à 2mol% en réaction de métathèse cyclisante du diethyl 2,2-bis(2-methylallyl)malonate à 80°C, sous micro-ondes à 200W dans du toluène (TOL) et dans du hexafluorobenzène (C₆F₆), selon le schéma réactionnel V.

### D. SYNTHESE DE COMPLEXES DE RUTHENIUM DE TYPE CHELATANTS PORTANT UN LIGAND 1-ARYL-3-CYCLOALKYLE-IMIDAZOLINE-2-YLIDENE

### D.1. Synthèse d'un complexe de ruthénium alkylidène de type chelatant à partir du complexe de ruthénium de formule 1.1 et un styrényléther de formule 2H.

Le complexe de ruthénium de formule 1.1 (0,297 g; 0,300 mmol; 1 eq.) (aussi appelé [(5-cyclododecyl-2-mesityl)-imidazo-1-lidene]dichloro(3-phenyl-1H-inden-1-ylidene)(tricyclohexylphospine)ruthenium) a été mis en réaction avec le styrényléther de formule 2H, à savoir le isopropoxyphenyl-2-propenyl. La réaction est réalisée en présence de dichlorométhane (DCM ; 3 mL) et de Chlorure de Cuivre I (CuCl ; 35,2 mg ; 0,35 mmol ; 1,2 eq.), à 35°C pendant une durée de 5 à 6 heures. Après purification sur colonne sur gel de silice, on a pu isoler le complexe visée de formule 1.3 avec un rendement de 60 % (120 mg ; 0,178 mmol).

On obtient ainsi le complexe de ruthénium alkylidène de formule 1.3 : 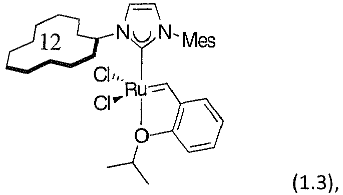 dans laquelle, Mes représente le groupement mésityle. Le chiffre 12 dans la formule 1.3 indique que chaque groupement cycloalkyle est un groupement cyclododecyle.

Le schéma réactionnel est représenté ci-après :

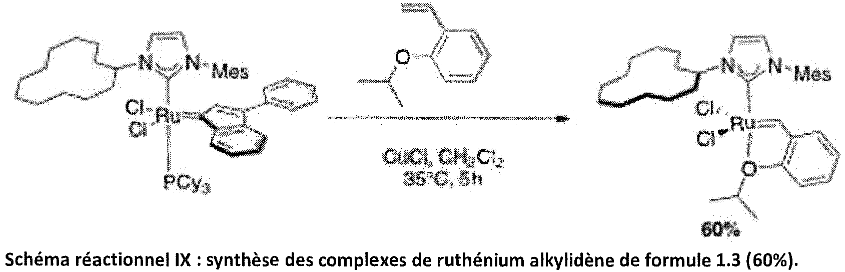

Dans ce schéma réactionnel, PCy₃ représente la tricyclohexylphosphine et Mes représente le groupement mésityle.

Le schéma montre que le produit obtenu, avec un rendement de 60% est le complexe de ruthénium alkylidène de formule 1.3.

Le complexe de ruthénium alkylidène de formule 1.3 a été isolé.

### RMN:

¹H (400MHz, CDCl₃) : 16.47 (s, 1H) ; 7.51 (m, 1H) ; 7.28 (d, *J* = 2Hz) ; 7.10 (s, 2H) ; 7.00 (m, 1H) ; 6.93 (m, 2H) ; 6.85 (d, *J* = 2Hz) ; 5.67 (sept., *J* = 5.8 HZ, 1H) ; 5.17 (sept., *J* = 7Hz, 1H) ; 2.50 (s, 3H) ; 2.23 (m, 4H) ; 2.02 (s, 6H) ; 1.80 (d, *J* = 5.8Hz, 6H) ; 1.75-1.45 (m, 14H)

¹³C (100 MHz, CDCl₃): 171.3 ; 152.3 ; 144.8 ; 139.6 ; 137.7 ; 137.6 ; 129.3 ; 129.0 ; 124.4 ; 122.7 ; 122.4 ; 120.1 ; 113.1 ; 61.1 ; 30.6 ; 25.7 ; 23.2 ; 23.1 ; 22.2 ; 21.6 ; 18.2

### D.2. Synthèse d'un complexe de ruthénium alkylidène de type chélatant à partir du complexe de ruthénium de formule 1.1 et un styrényléther de formule 3H.

Le complexe de ruthénium de formule 1.1 (243 mg ; 0,24 mmol ; 1 eq.) a été mis en réaction avec le styrényléther (122 mg ; 0,42 mmol ; 1,75 eq.) de formule 3H (à savoir le isopropoxyphenyl-2-propenyl-4,4,4 trifluoroacétamide, donc avec une fonction hétéroalkyle, à savoir une fonction trifluoroacétamide). La réaction est réalisée en présence de dichlorométhane (DCM ; 3 mL) et de Chlorure de Cuivre I (CuCl ; 38 mg ; 0,38 mmol ; 1,6 eq.), à température de 35 °C pendant une durée de 5-6 heures.

On obtient le complexe de ruthénium alkylidène de formule 1.4 : 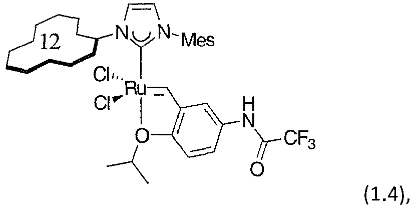 dans laquelle, Mes représente le groupement mésityle. Le chiffre 12 dans la formule 1.4 indique que chaque groupement cycloalkyle est un groupement cyclododecyle.

Le schéma réactionnel est similaire au schéma réactionnel X, mais en le styrényléther de formule 3H (et non pas le styrényléther de 2H).

Le complexe de formule 1.4 a été obtenu avec un rendement de 76% (146 mg ; 0,186 mmol).

### RMN:

¹H (400MHz, CDCl₃) : 16.34 (s, 1H) ; 7.89 (s, 1H) ; 7.54 (dd, *J* = 2.5 Hz , *J* = 8.8 Hz, 1H) ; 7.43 (d, *J* = 2.5Hz, 1H) ; 7.28 (d, *J* = 2.2 Hz) ; 7.13 (s, 2H) ; 6.88 (m, 2H) ; 5.61 (sept., *J* = 3.3 Hz, 1H) ; 5.12 (sept., *J* = 6.2 Hz, 1H) ; 2.55 (s, 3H) ; 2.23 (m, 4H) ; 2.01 (s, 6H) ; 1.78 (d, *J* = 6.2 Hz, 6H) ; 1.69 (m, 4H) ; 1.46 (m, 14H).

¹³C (100 MHz, CDCl₃): 286.5 ; 169.4 ; 154.8 ; 154.4 ; 150.1 ; 144.5 ; 140.0 ; 137.4 ; 137.2 ; 130.3 ; 129.2; 124.3; 120.0 (2C); 114.2; 113.1; 75.6; 60.9; 30.5; 25.4; 24.9; 23.0; 22.9; 22.0; 21.5 ; 21.2; 18.0

¹⁹F (376 MHz, CDCl₃) : -75.5

Le complexe de formule 1.4 a été soumis à différentes études.

Ainsi, la figure 12 montre la stabilité du complexe de ruthénium alkylidène de formule 1.4 dans le toluène à 60°C.

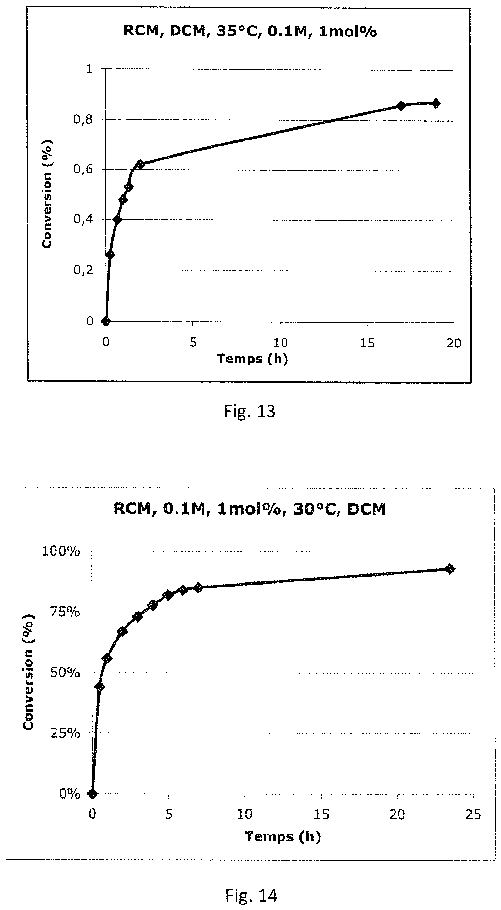

La figure 13 montre l'activité catalytique du complexe de formule 1.4 à 1mol% en réaction de métathèse cyclisante (RCM) du diethyl 2-allyl-2-(2-methylallyl)malonate à 35°C, dans du dichlorométhane (DCM). Le schéma réactionnel de cette RCM est représenté ci-après :

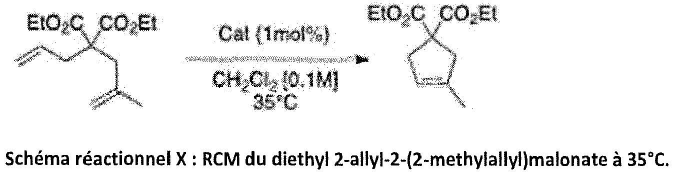

### D.3. Synthèse d'un complexe de ruthénium alkylidène de type chélatant à partir du complexe de ruthénium de formule 1.2 et un styrényléther de formule 2H.

Le complexe de ruthénium de formule 1.2 (0,309 g ; 0,344 mmol ; 1 eq.) (aussi appelé [(5-cyclopentyl-2-mesityl)-imidazo-1-lidene]dichloro(3-phenyl-1H-inden-1-ylidene)(tricyclohexylphospine)ruthenium) a été mis en réaction avec le styrényléther de formule 2H (65 mg; 0,37 mmol; 1,1 eq.). La réaction est réalisée en présence de dichlorométhane (DCM ; 3,5 mL) et de Chlorure de Cuivre I (CuCl ; 36,8 mg ; 0,37 mmol ; 1,1 eq.), à 35°C pendant une durée de 5 heures.

Après purification par colonne sur gel de silice, on obtient le complexe de ruthénium alkylidène de formule 1.5 (89 mg ; 0,158 mmol ; 45%) : 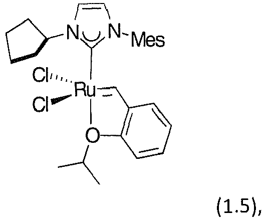 dans laquelle, Mes représente le groupement mésityle.

Le schéma réactionnel est représenté ci-après :

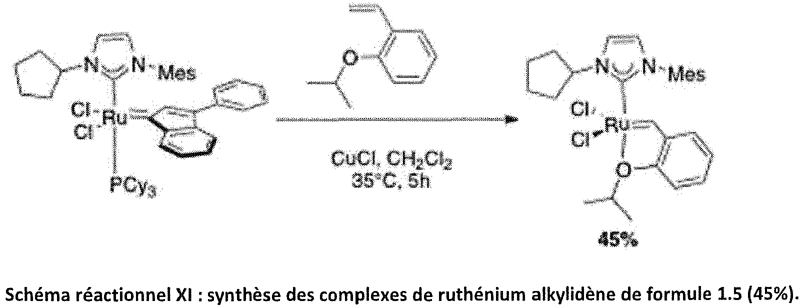

Dans ce schéma réactionnel, Cy₃P représente la tricyclohexylphosphine, Mes représente le groupement mésityle, et Ph représente un groupement phényle.

Le schéma montre que le produit obtenu, avec un rendement de 45% est le complexe de ruthénium alkylidène de formule 1.5.

### RMN:

¹H (400MHz, CDCl₃) : 16.42 (s, 1H); 7.50 (m, 1H); 7.27 (m, 1H); 7.10 (s, 2H); 7.01 (m, 1H); 6.95 (m, 2H); 6.88 (d, J = 2Hz, 1H); 5.96, (q, J = 7.5Hz, 1H); 5.18 (sept., J = 6.21 Hz, 1H);

¹³C (100 MHz, CDCl₃):172.2; 152.7; 144.5; 139.6; 137.6; 137.4; 129.3; 129.0; 125.0; 122.7; 122.4 ; 118.5 ; 113.0 ; 75.1 ; 64.2 ; 34.4 ; 24.7 ; 22.0 ; 21.4 ; 18.2.

Le complexe de ruthénium alkylidène de formule 1.5 a été isolé et soumis à diverses études.

Ainsi, la figure 14 montre l'activité catalytique du complexe de formule 1.5 à 1mol% en réaction de métathèse cyclisante (RCM) du diethyl 2-allyl-2-(2-methylallyl)malonate à 30°C, dans du dichlorométhane (DCM), selon le schéma réactionnel III ; et

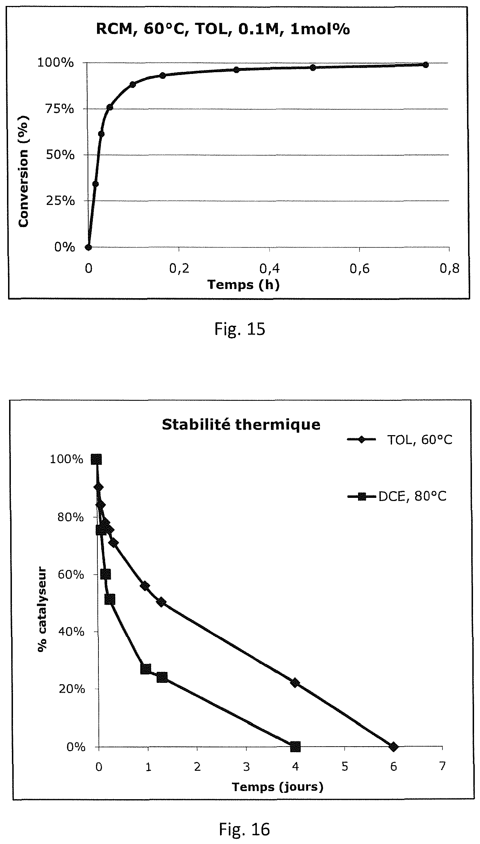

La figure 15 montre l'activité catalytique du complexe de formule 1.5 à 1mol% en réaction de métathèse cyclisante (RCM) du diethyl 2-allyl-2-(2-methylallyl)malonate à 60°C, dans du toluène (TOL).

### D.4. Synthèse d'un complexe de ruthénium alkylidène de type chélatant à partir du complexe de ruthénium de formule 1.2 et un styrényléther de formule 3H.

Le complexe de ruthénium de formule 1.2 (0,309 g; 0,344 mmol ; 1 eq.) a été mis en réaction avec le styrényléther de formule 3H (127 mg ; 0,44 mmol ; 1,3 eq.). La réaction est réalisée en présence de dichlorométhane (DCM ; 3,5 mL) et de Chlorure de Cuivre I (CuCl ; 36,8 mg ; 0,37 mmol ; 1,1 eq.), à 35°C pendant une durée de 6 heures.

Après purification par colonne sur gel de silice, on obtient le complexe de ruthénium alkylidène de formule 1.6 (99 mg ; 0,144 mmol ; 42%) :

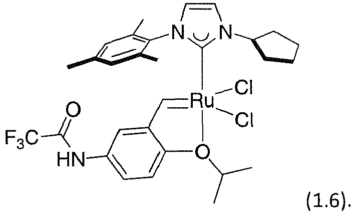

### RMN:

¹H (400MHz, CDCl₃) : 16.30 (s, H) ; 7.81 (s, 1H) ; 7.58 (dd, *J* = 2.2Hz, *J* = 9.5 Hz, 1H) ; 7.40 (d, *J* = 2.2Hz) ; 7.27 (m, 1H) ; 6.94 (m, 2H) ; 5.90 (qui., *J* = 8.0Hz, 1H) ; 5.15 (sept., *J* = 6.2 Hz, 1H) ; 2.69 (m, 2H) ; 2.55 (s, 3H) ; 1.95 (m, 12H) ; 1.78 (d, *J* = 6.2 Hz).

### E. SYNTHESE D'UN COMPLEXE DE RUTHENIUM DE TYPE CHELATANT CATIONIQUE PORTANT DEUX LIGANDS 1-ARYL-3-CYCLOALKYLE-IMIDAZOLINE-2-YLIDENE

Les Demanderesses ont synthétisé des complexes de ruthénium chélatants cationiques en partant d'une déprotonation de sels d'imidazolium 1-mésityl-3-cycloalkyl de BF₄⁻.

Pour cela, dans un ballon de *Schlenk* le sel d'immidazolium (environ 3 eq.) est dissous dans du toluène anhydre (par exemple 2 mL). Ensuite de l'hexaméthyldisilazane de potassium (environ 3eq.) est ajouté au milieu réactionnel. Le mélange est laissé sous agitation pendant 30 minutes à température ambiante, puis un complexe de ruthénium précurseur de type d'Hoveyda-Grubbs de 1ère génération (environ 1eq.) est ajouté. Le mélange est placé a environ 40°C pendant 2 à 3 heures puis purifié par colonne sur gel de silice (par pentane, puis CH₂Cl₂ puis acétone) pour conduire à une solution comportant le complexe visé. Cette solution est évaporée puis dissoute dans de l'acétate d'éthyle. Le solide résultant est filtré et lavé à l'acétate d'éthyle pour donner le complexe chélatant cationique visé.

**E.1.** Synthèse d'un premier complexe de ruthénium chélatant cationique en partant du sel d'imidazolium 1-mésityl-3-cyclododecyl de BF₄⁻.

Les Demanderesses ont synthétisé un complexe de ruthénium chélatant cationique en partant d'une déprotonation du sel d'imidazolium 1-mésityl-3-cyclododecyl de BF₄⁻ de formule 9S (2,95 mmol ; 2,93 eq.) par du hexaméthyldisilazane de potassium (KHMDS, 2,93 eq.), sous atmosphère inerte, à température ambiante (30°C), et en présence de toluène, permet de générer le diaminocarbène N-hétérocyclique libre.

Après trente minutes de réaction, le complexe de ruthénium précurseur (604 mg ; 1 mmolo ; 1 eq.) de Sigma-Aldrich (marque déposée) dit d'Hoveyda-Grubbs de 1^{ère} génération (en anglais : *«Hoveyda-Grubbs catalyst 1^{st} génération* ») ou dichloro(o-isopropoxyphenylméthylène)(tricyclohexylphosphine)ruthénium(II) commercialement disponible auprès de la société Sigma-Aldrich Co. est ajouté. Le mélange obtenu est laissé en réaction à une température de 40°C (ou 80°C) pendant 2-3 heures.

On obtient le complexe de ruthénium alkylidène de formule 4.1 (564 mg ; 0,52 mmol ; 52%) : 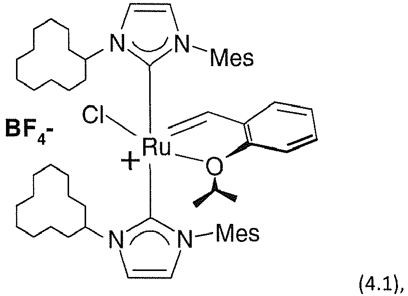 dans laquelle, Mes représente le groupement mésityle.

Le schéma réactionnel pour la synthèse du complexe 4.1 est représenté ci-après :

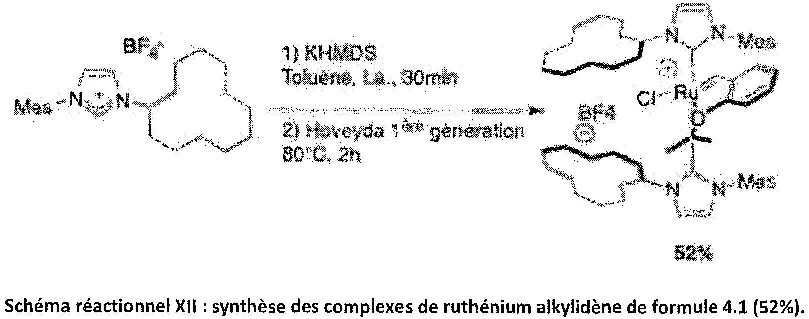

Dans ce schéma réactionnel, Mes représente le groupement mésityle.

Le schéma montre que le produit obtenu est le complexe de ruthénium alkylidène de formule 4.1, avec un rendement de 52%.

### RMN:

¹H (400MHz, Acetone D₆) : 17.12 (s, 1H) ; 7.83 (d, *J* = 1.8 Hz, 2H) ; 7.52 (m, 1H) ; 7.12 (m, 3H) ; 6.89 (m, 3H) ; 6.17 (dd, *J* = 1.5 Hz, *J* = 7.4 Hz, 1H) ; 5.99 (s, 2H) ; 5.62 (m, 2H) ; 5.16 (sept., 6.2 Hz, 1H) ; 2.70 (m, 3H) ; 2.65 (m, 4H) : 2.20 (s, 6H) ; 2.10 (m, 4H) ; 1.92 (s, 6H) : 1.80-1.40 (m, 39H).

¹³C (100MHz, Acetone D₆) : 287.1 ; 183.4 ; 158.6 ; 139.8 ; 139.6 ; 136.8 ; 136.5 ; 135.2 ; 131.5 ; 130.0 ; 129.6 ; 126.1 ; 123.6 ; 122.8 ; 122.3 ; 112.3 ; 76.9 ; 61.4 ; 27.3 ; 27.1 ; 27.0 ; 23.2 ; 23.1 ; 23.0 ; 22.9 ; 22.5 ; 22.2 ; 21.0 ; 20.5 ; 18.3 ; 16.9.

¹⁹F (376 MHz, CDCl₃) : -151.98 / -152,0 (s).

L'Annexe 1 présente les résultats cristallographiques du complexe de ruthénium chélatant cationique de formule 4.1, en utilisant le logiciel cristallographique CrysAlisPro CCD, Oxford Diffraction Ltd., Version 1.171.35.11.

Le complexe de ruthénium alkylidène de formule 4.1 a été isolé et soumis à diverses études.

Ainsi, la figure 16 montre la stabilité thermique du complexe de ruthénium de formule 4.1, à 60°C dans du toluène (TOL), et à 80°C dans du dichloroéthane (DCE).

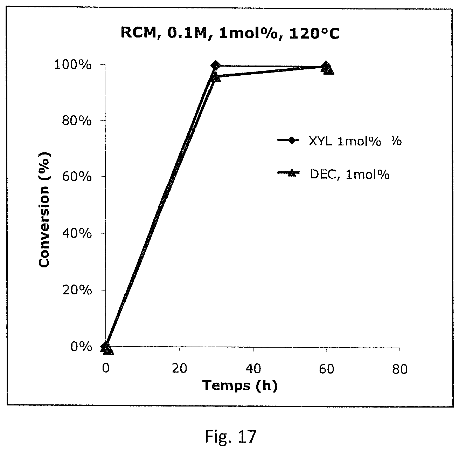

La figure 17 montre l'activité catalytique du complexe de formule 4.1 à 1mol% en réaction de métathèse cyclisante (RCM) du diethyl 2,2-diallylmalonate à 120°C, dans du Xylène (XYL) et dans du diéthylcarbonate (DEC), selon le schéma réactionnel suivant :

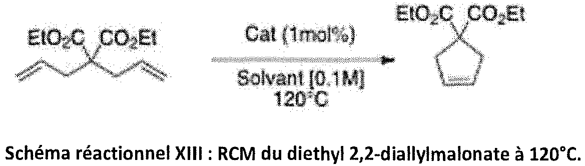

On peut notamment observer une bonne activité catalytique du complexe de formule 4.1.

**E.2.** Synthèse d'un complexe de ruthénium chélatant cationique en partant du sel d'imidazolium 1-mésityl-3-cyclooctyl de BF₄⁻.

Les conditions expérimentales du point E.1. ci-dessus ont été repris en utilisant le sel de formule 16S (ou 5-cyclooctyl-2-mesityl)-imidazolium tétrafluoroborate) (289 mg; 0,75 mmol ; 2,77 eq.) et le complexe de ruthénium précurseur de type d'Hoveyda-Grubbs de 1ère génération (163,1 mg ; 0,27 mmol ; 1 eq.). On obtient ainsi un complexe de formule 4.2 (85,6 mg ; 0,09 mmol ; 33%) :

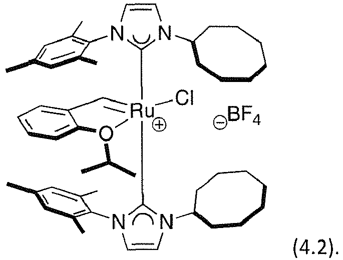

### RMN :

¹H (400MHz, CDCl₃) : 17.06 (s, 1H) ; 7.44 (m, 1H) ; 7.35 (d, *J* = 1.8Hz, 2H) ; 7.08 (d, *J* = 8.4Hz, 1H) ; 6.85 (s, 2H) ; 6.67 (d, *J* = 1.8Hz, 2H) ; 6.60 (t, *J* = 7.3Hz, 1H) ; 5.94 (s, 2H) ; 5.85 (dd, *J* = 1.5Hz, 7.7Hz, 1H) ; 5.46 (m, 2H) ; 5.13 (sept., *J* = 6.0Hz, 1H) ; 2.44 (m, 8H) ; 2.19 (s, 6H) ; 2.12 (m, 2H) ; 1.91 (s, 6H) ; 1.76 (m, 18H) ; 1.32 (d, *J*= 6.0 Hz) ; 1.05 (s, 6H).

### E.3. Synthèse d'un complexe de ruthénium chélatant cationique en partant du sel d'imidazolium 1-mésityl-3-cycloheptyle de BF₄⁻.

Les conditions expérimentales du point E.1. ci-dessus ont été repris en utilisant le sel de formule 17S (ou 5-cycloheptyl-2-mesityl)-imidazolium tétrafluoroborate) (221 mg ; 0,60 mmol ; 3,0 eq.) et le complexe de ruthénium précurseur de type d'Hoveyda-Grubbs de 1ère génération (120,0 mg ; 0,2 mmol ; 1 eq.). On obtient ainsi un complexe de formule 4.3 (75,3 mg ; 0,09 mmol ; 40%) :

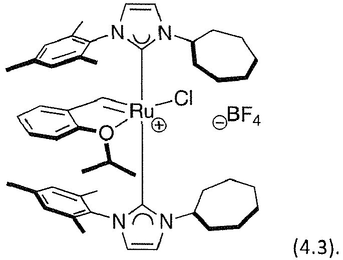

### RMN:

¹H (400MHz, CDCl₃) : 17.06 (s, 1H) ; 7.43 (m, 1H) ; 7.36 (d, *J* = 1.8 HZ, 2H) ; 7.05 (d, *J* = 8.4Hz, 1H) ; 6.86 (s, 2H) ; 6.68 (d, *J*= 1.8Hz, 2H) ; 6.60 (t, *J*= 7.3Hz, 1H) ; 5.93 (s, 2H) ; 5.83 (dd, *J* = 1.5Hz, *J* = 7.7Hz, 1H) ; 5.53 (q, *J* = 7.0Hz, 2H) ; 5.11 (sept., *J* = 6.2Hz, 1H) ; 2.61 (m, 4H) ; 2.30 (m, 2H) ; 2.20 (s, 6H) ; 2.09 (m, 4H) ; 1.90 (s, 6H) ; 1.84 (m, 12H) ; 1.34 (d, *J* = 6.2Hz, 6H) ; 1.06 (s, 6H).

### E.4. Synthèse d'un complexe de ruthénium chélatant cationique en partant du sel d'imidazolium 1-mésityl-3-cyclohexyle de BF₄⁻.

Les conditions expérimentales du point E.1. ci-dessus ont été repris en utilisant le sel de formule 8S (ou 5-cyclohexyl-2-mesityl)-imidazolium tétrafluoroborate) (215,5 mg ; 0,606 mmol ; 3,0 eq.) et le complexe de ruthénium précurseur de type d'Hoveyda-Grubbs de 1ère génération (122,2 mg; 0,203 mmol ; 1 eq.). On obtient ainsi un complexe de formule 4.4 (55,8 mg; 0,06 mmol ; 30%) :

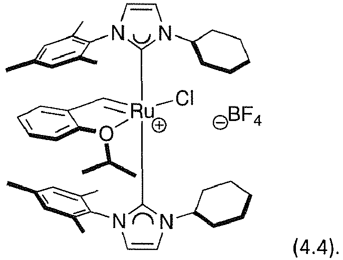

### RMN:

¹H (400MHz, CDCl₃) : 17.16 (s, 1H) ; 7.41 (m, 1H) ; 7.37 (d, *J* = 1.8Hz, 2H) ; 7.00 (d, *J* = 8.4Hz, 1H) ; 6.87 (s, 2H) ; 6.65 (d, *J* = 1.8Hz, 2H) ; 6.56 (t, *J* = 7.7Hz, 1H) ; 5.95 (s, 2H) ; 5.77 (dd, *J* = 1.5Hz, *J* = 7.7 Hz, 1H) ; 5.18 (m, 2H) ; 5.06 (sept., *J* = 6.2Hz, 1H) ; 2.55 (m, 4H) ; 2.20 (s, 6H) ; 2.04 (m, 6H) ; 1.90 (s, 6H) ; 1.74 (m, 4H) ; 1.64 (m, 4H) ; 1.48 (m, 2H) 1.33 (d, *J* = 6.2Hz, 6H) ; 1.02 (s, 6H).

### E.5. Synthèse d'un deuxième complexe de ruthénium chélatant cationique en partant du sel d'imidazolium 1-mésityl-3-cyclododecyl de BF₄⁻.

Les conditions expérimentales du point E.1. ci-dessus ont été repris en utilisant le complexe le sel d'imidazolium de formule 9S (361,8 mg; 0,82 mmol ; 3,5 eq.) et un complexe de ruthénium précurseur, à savoir le de dichloro(4-*iso*-propoxy-*N*,*N*-dimethyl-3-methylène) (tricyclohexylphosphine)ruthenium (147,1 mg ; 0,23 mmol ; 1 eq.). On obtient ainsi un complexe de formule 4.5 (79,7 mg ; 0,07 mmol ; 35%) :

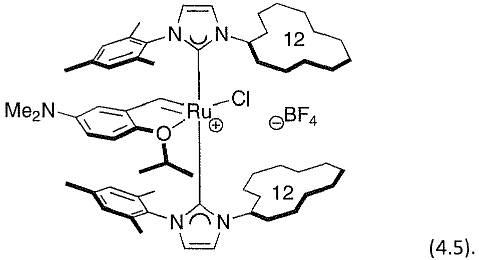

### RMN:

¹H (400MHz, CDCl₃) : 17.01 (s, 1H) ; 7.26 (s, 2H) ; 6.87 (s, 2H) ; 6.82 (s, 2H) ; 6.62 (d, *J* = 1.4Hz, 2H) ; 6.01 (s, 2H) ; 5.50 (m, 2H) ; 5.28 (s, 1H) ; 5.29 (s, 2H) ; 4.97 (sept., *J* = 6.2 Hz, 1H) ; 2.90 (s, 6H) ; 2.40 (m, 4H) ; 2.16 (s, 6H) ; 2.11 (m, 3H) ; 1.88 (s, 6H) ; 1.71 (m, 5H) ; 1.46 (m, 32H) ; 1.23 (d, *J* = 6.2Hz) ; 1.04 (s, 6H).

Les Demanderesses ont synthétisé des sels d'imidazolium dissymétriques comportant des groupements dissymétriques R1 et R2 tels que décrits ci-dessus et les a combinés à des complexes de ruthénium précurseurs, afin de fournir des complexes métalliques très réactifs, sélectifs et stable. Le ligand carbène imidazoline-2-ylidene étant stable, cela évite la réaction parasite de dimérisation de l'espèce carbénique sur elle-même comme décrit dans NHCs in Synthesis, S. P. Nolan, Ed., 2006, Wiley-VCH. De ce fait, de bons rendements pour la synthèse de complexes organométalliques cibles sont observés.

La présente invention offre donc une voie inédite pour synthétiser des nouveaux complexes métalliques à partir de sels diaminocarbènes de type 1-aryl-3-cycloalkyl-imidazoline-2-ylidene.

Les exemples de réalisation démontrent par ailleurs la stabilité et réactivité des complexes de l'invention.

**Annexe 1 : Résultats cristallographiques du complexe de ruthénium chélatant cationique de formule 4.1, en utilisant le matériel cristallographique CrysAlisPro CCD, Oxford Diffraction Ltd., Version 1.171.35.11.**

| | | | | |
|---|---|---|---|---|
| *Identification code* | *mr129* | | | |
| *Empirical formula* | *C63 H96 B Cl3 F4 N4 O2 Ru* | | | |
| *Formula weight* | *1235.67* | | | |
| *Temperature* | *140(2) K* | | | |
| *Wavelength* | *0.71069 A* | | | |
| *Crystal system, space group* | *Triclinic, P-1* | | | |
| *Unit cell dimensions* | *a = 10.6391(4) A* | *alpha* = *80.702(3) deg.* | | |
| | *b = 10.8550(5) A* | *beta = 89.011(3) deg.* | | |
| | *c = 28.5762(8) A* | *gamma = 85.609(4) deg.* | | |
| *Volume* | *3247.2(2) A^3* | | | |
| *Z, Calculated density* | *2, 1.264 Mg*/*m^3* | | | |
| *Absorption coefficient* | *0.420 mm^-1* | | | |
| *F(000)* | *1308* | | | |
| *Crystal size x* | *0.275 0.183 x 0.088 mm* | | | |
| *Theta range for data collection* | *2.57 to 27.00 deg.* | | | |
| *Limiting indices* | *-13<=h<=13, -13<=k<=12, -32<=l<=36* | | | |
| *Reflections collected* / *unique* | *24382* / *13597 [R(int) = 0.0637]* | | | |
| *Completeness to theta = 27.00* | *95.9 %* | | | |
| *Absorption correction* | *None* | | | |
| *Refinement method* | *Full-matrix least-squares on F^2* | | | |
| *Data* / *restraints* / *parameters* | *13597*/ *2* / *673* | | | |
| *Goodness-of-fit on F^2* | *0.824* | | | |
| *Final R indices [l>2sigma(l)]* | *R1 = 0.0938, wR2 = 0.2391* | | | |
| *R indices (all data)* | *R1 = 0.2591, wR2 = 0.2888* | | | |
| *Largest diff. peak and hole* | *1.165 and -1.064 e.A^-3* | | | |

*Atomic coordinates (x 10^4) and equivalent isotropic displacement parameters (A^2 x 10^3) for mr129.*
*U(eq) is defined as one third of the trace of the orthogonalized Uij tensor.*

| | *x* | *y* | *z* | *U(eq)* |
|---|---|---|---|---|
| *C(61)* | *4732(18)* | *3218(17)* | *8943(7)* | *235(9)* |
| *Cl(2)* | *4331(7)* | *2693(7)* | *9504(2)* | *310(4)* |
| *Cl(3)* | *5684(6)* | *4269(6)* | *8782(3)* | *308(4)* |
| *C(71)* | *6024(16)* | *5850(17)* | *5495(7)* | *207(7)* |
| *C(72)* | *6890(20)* | *6770(20)* | *5651(10)* | *306(13)* |
| *O(71)* | *7823(17)* | *7650(18)* | *5498(6)* | *283(7)* |
| *C(73)* | *8540(20)* | *8430(20)* | *5699(9)* | *256(10)* |
| *C(74)* | *9570(16)* | *9564(17)* | *5632(7)* | *207(7)* |
| *B(1)* | *7151(15)* | *6433(15)* | *7058(6)* | *101(4)* |
| *F(1)* | *6340(6)* | *5757(7)* | *6905(2)* | *143(3)* |
| *F(2)* | *7308(6)* | *6329(6)* | *7511(2)* | *120(2)* |
| *F(3)* | *6936(12)* | *7680(8)* | *6842(3)* | *209(5)* |
| *F(4)* | *8302(7)* | *6125(10)* | *6827(2)* | *194(4)* |
| *Ru(1)* | *1414(1)* | *290(1)* | *7994(1)* | *86(1)* |
| *Cl(1)* | *2888(3)* | *1592(3)* | *8214(1)* | *109(1)* |
| *N(1)* | *3505(13)* | *-2023(10)* | *8181(3)* | *123(5)* |
| *N(2)* | *3766(10)* | *-906(9)* | *7510(3)* | *88(3)* |
| *N(3)* | *79(8)* | *2803(9)* | *7532(2)* | *80(3)* |
| *N(4.)* | -*791*(*11*) | *2333(12)* | *8199(3)* | *113(5)* |
| *O*(*1*) | *-22(5)* | *-1000(6)* | *7856(2)* | *88(2)* |
| *C*(*1*) | *973(10)* | *-366(10)* | *8589(3)* | *124(5)* |
| *C(2)* | *73(11)* | *-1288(10)* | *8676(3)* | *116(5)* |
| *C(3)* | *-311(13)* | *-1836(12)* | *9125(3)* | *165(7)* |
| *C(4)* | *-1207(14)* | *-2736(13)* | *9173(4)* | *182(8)* |
| *C(5)* | *-1710(12)* | *-3081(11)* | *8767(4)* | *136(5)* |
| *C(6)* | *-1362(9)* | *-2516(9)* | *8311(3)* | *96(4)* |
| *C(7)* | *-446(9)* | *-1613(9)* | *8277(3)* | *98(4)* |
| *C(8)* | *-459(10)* | *-1316(12)* | *7396(2)* | *95(4)* |
| *C(9)* | *-910(20)* | *-258(18)* | *7142(6)* | *316(17)* |
| *C(10)* | *415(18)* | *-1800(30)* | *7156(6)* | *360(20)* |
| *C(11)* | *3567(14)* | *97(14)* | *7099(4)* | *126(5)* |
| *C(12)* | *4280(20)* | *1172(16)* | *7096(5)* | *168(7)* |
| *C(13)* | *5560(13)* | *870(11)* | *7116(4)* | *104(4)* |
| *C(14)* | *6168(18)* | *2150(11)* | *6975(5)* | *166(7)* |
| *C(15)* | *6214(14)* | *2688(12)* | *6492(6)* | *145(6)* |
| *C(16)* | *6850(12)* | *1836(15)* | *6185(5)* | *144(5)* |
| *C(17)* | *6384(17)* | *2190(20)* | *5638(8)* | *235(12)* |
| *C(18)* | *5260(30)* | *1586(19)* | *5551(5)* | *254(14)* |
| *C(19)* | *4968(19)* | *336(19)* | *5661(5)* | *175(7)* |
| *C(20)* | *3784(15)* | *-162(19)* | *5747(4)* | *163(6)* |
| *C(21)* | *3142(16)* | *170(20)* | *6196(6)* | *240(11)* |
| *C(22)* | *3670(13)* | *-477(14)* | *6630(4)* | *162(7)* |
| *C(23)* | *3009(9)* | *-1039(10)* | *7895(4)* | *81(3)* |
| *C(24)* | *4735(13)* | *-1815(11)* | *7555(4)* | *109(5)* |
| *C(25)* | *4596(15)* | *-2555(15)* | *7980(7)* | *155(8)* |
| *C(26)* | *3066(11)* | *-2597(11)* | *8646(4)* | *139(6)* |
| *C(27)* | *2304(11)* | *-3588(12)* | *8682(4)* | *147(6)* |
| *C(28)* | *1945(14)* | *-4160(13)* | *9127(5)* | *185(8)* |
| *C(29)* | *2313(17)* | *-3736(17)* | *9526(5)* | *241(12)* |
| *C(30)* | *3110(15)* | *-2779(16)* | *9493(4)* | *229(11)* |
| *C(31)* | *3521(14)* | *-2192(14)* | *9041(4)* | *186(8)* |
| *C(32)* | *1960(11)* | *-4131(11)* | *8238(5)* | *154(6)* |
| *C(33)* | *1820(18)* | *-4320(20)* | *10019(5)* | *324(17)* |
| *C(34)* | *4371(12)* | *-1138(13)* | *9007(4)* | *193(8)* |
| *C(35)* | *891(9)* | *2819(10)* | *7105(3)* | *83(3)* |
| *C(36)* | *1961(10)* | *3598(14)* | *7097(3)* | *110(4)* |
| *C(37)* | *1648(9)* | *4896(11)* | *7111(4)* | *93(3)* |
| *C(38)* | *2870(9)* | *5634(11)* | *6953(4)* | *110(4)* |
| *C(39)* | *3161(10)* | *5797(12)* | *6450(4)* | *122(5)* |
| *C(40)* | *2192(13)* | *6541(13)* | *6125(5)* | *158(6)* |
| *C(41)* | *2217(14)* | *6254(18)* | *5602(5)* | *173(7)* |
| *C(42)* | *1756(15)* | *5010(16)* | *5550(4)* | *142(5)* |
| *C(43)* | *475(11)* | *4846(15)* | *5658(3)* | *119(5)* |
| *C(44)* | *53(14)* | *3507(12)* | *5763(3)* | *125(5)* |
| *C(45)* | *622(14)* | *2753(12)* | *6198(4)* | *146(5)* |
| *C(46)* | *58(11)* | *3120(11)* | *6648(3)* | *113(4)* |
| *C(47)* | *116(9)* | *1899(9)* | *7906(3)* | *71(3)* |
| *C(48)* | *-1333(13)* | *3480(15)* | *8003(5)* | *121(6)* |
| *C(49)* | *-795(10)* | *3749(12)* | *7586(3)* | *88(4)* |
| *C(50)* | *-1184(11)* | *1680(12)* | *8656(3)* | *130(5)* |
| *C(51)* | *-2218(11)* | *967(12)* | *8669(3)* | *136(6)* |
| *C(52)* | *-2630(13)* | *404(14)* | *9114(4)* | *174(8)* |
| *C(53)* | *-2018(15)* | *492(16)* | *9531(3)* | *203(9)* |
| *C(54)* | *-960(15)* | *1227(16)* | *9497(4)* | *237(11)* |
| *C(55)* | *-552(13)* | *1836(14)* | *9066(3)* | *176(8)* |
| *C(56)* | *-2931(10)* | *867(11)* | *8224(3)* | *113(4)* |
| *C(57)* | *-2438(18)* | *-251(18)* | *9999(4)* | *283(14)* |
| *C(58)* | *508(13)* | *2690(14)* | *9037(3)* | *211(9)* |

## Revendications

1. Complexe de ruthénium alkylidène comprenant un ligand 1-aryl-3-cycloalkyl-imidazoline-2-ylidene, **caractérisé en ce que** le groupement cycloalkyle dudit ligand 1-aryl-3-cycloalkyl-imidazoline-2-ylidene est un alkyle aliphatique secondaire cyclique.

2. Complexe de ruthénium alkylidène selon la revendication 1, dans lequel ledit complexe est de formule générale choisie dans le groupe constitué de la formule 1, 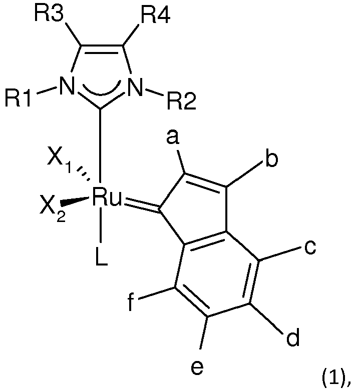 dans laquelle
R1 est un groupement aromatique,
R2 est un groupement alkyle aliphatique secondaire cyclique,
R3 et R4 sont choisis indépendamment l'un de l'autre dans le groupe constitué d'un atome d'hydrogène, d'halogénure et d'un groupement alkyle,
X₁ et X₂ sont des ligands anioniques,
L est un ligand non-chargé, et
a, b, c, d, e et f sont choisis indépendamment l'un de l'autre dans le groupe constitué d'un atome d'hydrogène, d'un groupement alkyle et d'un groupement hétéroalkyle ;
de la formule 2 : 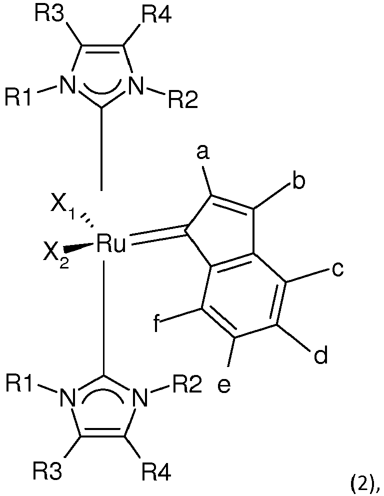 dans laquelle
R1 est un groupement aromatique,
R2 est un groupement alkyle aliphatique secondaire cyclique,
R3 et R4 sont choisis indépendamment l'un de l'autre dans le groupe constitué d'un atome d'hydrogène, d'halogénure et d'un groupement alkyle,
X₁ et X₂ sont des ligands anioniques, et
a, b, c, d, e et f sont choisis indépendamment l'un de l'autre dans le groupe constitué d'un atome d'hydrogène, d'un groupement alkyle et d'un groupement hétéroalkyle ;
de la formule 3 : 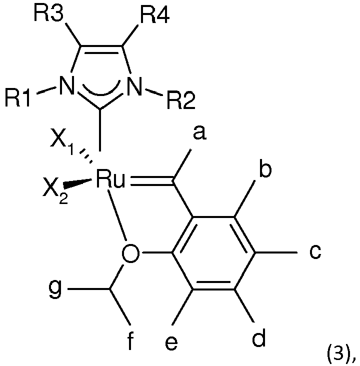 dans laquelle
R1 est un groupement aromatique,
R2 est un groupement alkyle aliphatique secondaire cyclique,
R3 et R4 sont choisis indépendamment l'un de l'autre dans le groupe constitué d'un atome d'hydrogène, d'halogénure et d'un groupement alkyle,
X₁ et X₂ sont des ligands anioniques, et
a, b, c, d, e, f et g sont choisis indépendamment l'un de l'autre dans le groupe constitué d'un atome d'hydrogène, d'un groupement alkyle et d'un groupement hétéroalkyle ;
et de la formule 4 : 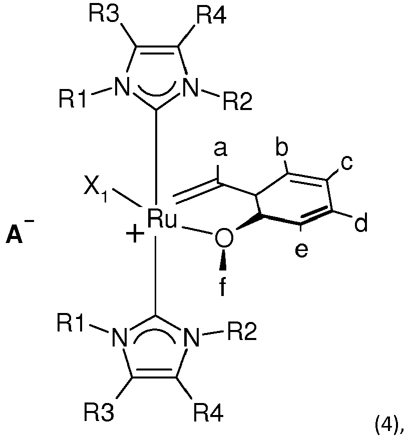 dans laquelle
R1 est un groupement aromatique,
R2 est un groupement alkyle aliphatique secondaire cyclique,
R3 et R4 sont choisis indépendamment l'un de l'autre dans le groupe constitué d'un atome d'hydrogène, d'halogénure et d'un groupement alkyle,
a, b, c, d, e et f sont choisis indépendamment l'un de l'autre dans le groupe constitué d'un atome d'hydrogène, d'un groupement alkyle et d'un groupement hétéroalkyle,
X₁ est un ligand anionique, et
A⁻ est un anion.

3. Complexe de ruthénium alkylidène selon la revendication 2, dans lequel R1 est choisi dans le groupe constitué de 2,4,6-triméthylphényle, de 3,5-dinitrophényle, de 2,4,6-tris(trifluorométhyle)phényle, de 2,4,6-trichlorophényle, et de hexafluorophényle.

4. Complexe de ruthénium alkylidène selon l'une des revendications 2 et 3, dans lequel R2 est choisi dans le groupe constitué de cyclopentyle, de cyclohexyle, de cycloheptyle, de cyclooctyle, de cyclodecyle, de cyclododecyle, et de cyclopentadecyle.

5. Complexe de ruthénium alkylidène selon l'une des revendications 2 à 4, dans lequel R3 et R4 sont chacun un atome d'hydrogène.

6. Complexe de ruthénium alkylidène selon la revendication 1, dans lequel ledit complexe est de formule choisie dans le groupe constitué de la formule 1.1 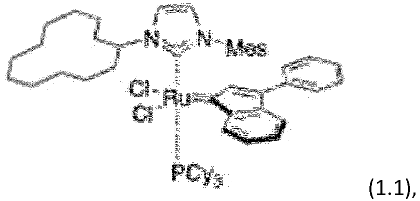 dans laquelle, PCy3 représente la tricyclohexylphosphine, Mes représente le groupement mésityle ;
de la formule 1.2 : 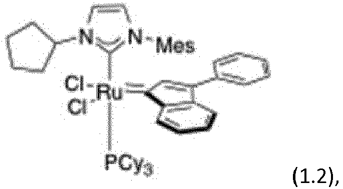 dans laquelle, PCy3 représente la tricyclohexylphosphine et Mes représente le groupement mésityle ;
de la formule 2.1 : 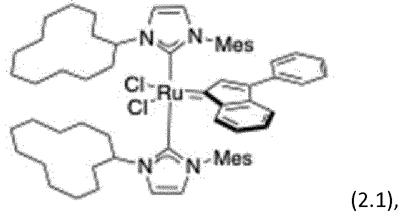 dans laquelle, Mes représente le groupement mésityle ; et de la formule 2.2, 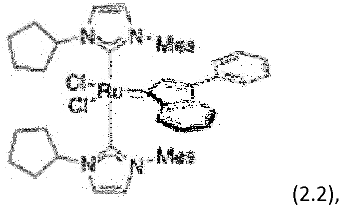 dans laquelle, Mes représente le groupement mésityle.

7. Utilisation d'un complexe de ruthénium alkylidène selon l'une des revendications précédentes en tant que catalyseur dans une réaction de métathèse d'oléfine.

8. Procédé de préparation d'un complexe de ruthénium alkylidène comprenant les étapes suivantes :
a. former un premier mélange réactionnel par la mise en contact d'un sel d'imidazolium de formule 1S : 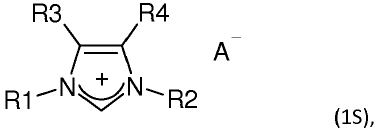 dans laquelle
R1 est un groupement aromatique,
R2 est choisi parmi un groupement alkyle aliphatique secondaire cyclique et un groupement hétéroalkyle,
R3 et R4 sont choisis indépendamment l'un de l'autre dans le groupe constitué d'un atome d'hydrogène, d'halogénure et d'un groupement alkyle, et
A⁻ est un anion,
avec une base forte, dans du solvant, sous atmosphère inerte, à température ambiante, pendant une durée d'au moins 30 minutes ;
b. ajouter au mélange réactionnel formé à l'étape a., un complexe de ruthénium précurseur, puis chauffer à une température d'au moins 40°C pendant une durée d'au moins 2 heures ;
c. isoler un complexe de ruthénium alkylidène.

9. Procédé selon la revendication 8, dans lequel l'étape b. est réalisée à une température d'environ 80°C.

10. Procédé selon l'une des revendications 8 et 9, dans lequel le complexe de ruthénium précurseur ajouté à l'étape b. est de formule 1P : 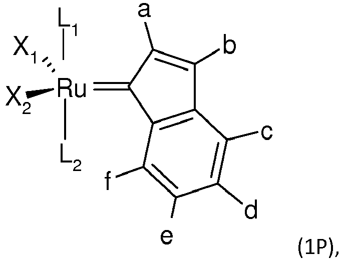 dans laquelle,
X₁ et X₂ sont des ligands anioniques,
L₁ et L₂ sont des ligands non-chargés, préférentiellement de la tricyclohexylphosphine, et
a, b, c, d, e et f sont choisis indépendamment l'un de l'autre dans le groupe constitué d'un atome d'hydrogène, d'un groupement alkyle et d'un groupement hétéroalkyle.

11. Procédé selon l'une des revendications 8 et 9, dans lequel le complexe de ruthénium précurseur ajouté à l'étape b. est de formule 2P : 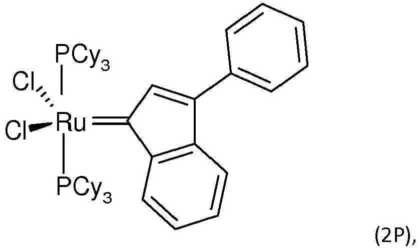 dans laquelle PCy3 représente la tricyclohexylphosphine.

12. Procédé selon l'une des revendications 8 à 11, comprenant en outre l'étape de :
d. former un deuxième mélange réactionnel par la mise en contact du complexe de ruthénium alkylidène isolé à l'étape c. avec un styrényléther.

13. Procédé selon la revendication 8, dans lequel l'étape b. est réalisée pendant une durée d'au moins 3 heures et dans lequel ledit complexe ruthénium précurseur est de type dit Hoveyda-Grubbs de 1^{ère} génération.

14. Procédé selon la revendication 12, dans lequel ledit styrényléther est de la formule 4H : 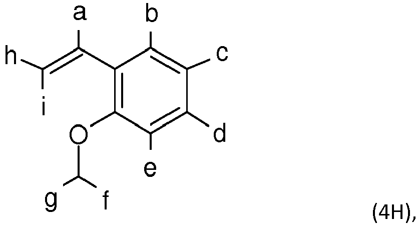 dans laquelle a, b, c, d, e, f, g, i et h sont choisis indépendamment l'un de l'autre dans le groupe constitué d'un atome d'hydrogène, d'un groupement alkyle et d'un groupement hétéroalkyle.

## Patentansprüche

1. Rutheniumalkyliden-Komplex mit einem 1-Aryl-3-Cycloalkylimidazolin-2-yliden-Liganden, **dadurch gekennzeichnet, dass** die Cycloalkylgruppe des 1-Aryl-3-Cycloalkylimidazolin-2-yliden-Liganden ein zyklisches, sekundäres, aliphatisches Alkyl ist.

2. Rutheniumalkyliden-Komplex nach Anspruch 1, wobei der Komplex von einer allgemeinen Formel ist, die aus der Gruppe ausgewählt ist, die besteht aus der Formel 1 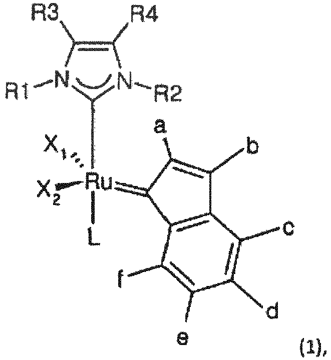 worin
R1 eine aromatische Gruppe ist,
R2 eine zyklische, sekundäre, aliphatische Alkylgruppe ist,
R3 und R4 unabhängig voneinander aus der Gruppe ausgewählt sind, die aus einem Wasserstoffatom, einem Halogenidatom und einer Alkylgruppe besteht,
X₁ und X₂ anionische Liganden sind,
L ein nicht geladener Ligand ist, und
a, b, c, d, e und f unabhängig voneinander aus der Gruppe ausgewählt sind, die aus einem Wasserstoffatom, einer Alkylgruppe und einer Heteroalkylgruppe besteht;
der Formel 2: 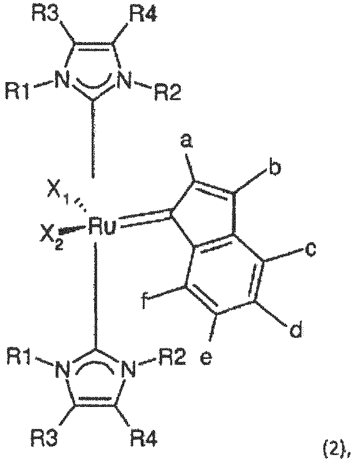 worin
R1 eine aromatische Gruppe ist,
R2 eine zyklische, sekundäre, aliphatische Alkylgruppe ist,
R3 und R4 unabhängig voneinander aus der Gruppe ausgewählt sind, die aus einem Wasserstoffatom, einem Halogenidatom und einer Alkylgruppe besteht,
X₁ und X₂ anionische Liganden sind, und
a, b, c, d, e und f unabhängig voneinander aus der Gruppe ausgewählt sind, die aus einem Wasserstoffatom, einer Alkylgruppe und einer Heteroalkylgruppe besteht;
der Formel 3: 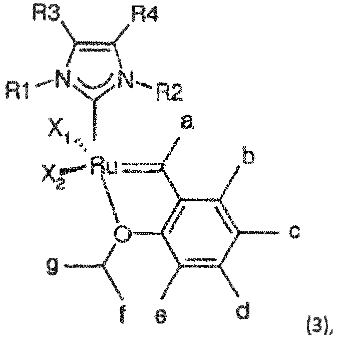 worin
R1 eine aromatische Gruppe ist,
R2 eine zyklische, sekundäre, aliphatische Alkylgruppe ist,
R3 und R4 unabhängig voneinander aus der Gruppe ausgewählt sind, die aus einem Wasserstoffatom, einem Halogenidatom und einer Alkylgruppe besteht,
X₁ und X₂ anionische Liganden sind, und
a, b, c, d, e, f und g unabhängig voneinander aus der Gruppe ausgewählt sind, die aus einem Wasserstoffatom, einer Alkylgruppe und einer Heteroalkylgruppe besteht;
und der Formel 4: 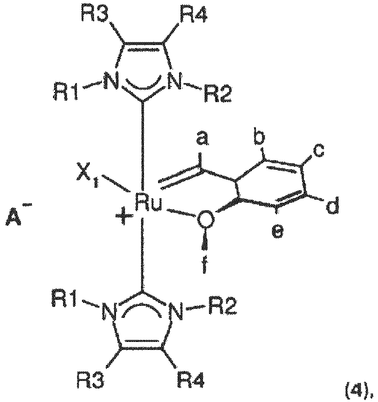 worin
R1 eine aromatische Gruppe ist,
R2 eine zyklische, sekundäre, aliphatische Alkylgruppe ist,
R3 und R4 unabhängig voneinander aus der Gruppe ausgewählt sind, die aus einem Wasserstoffatom, einem Halogenidatom und einer Alkylgruppe besteht,
a, b, c, d, e und f unabhängig voneinander aus der Gruppe ausgewählt sind, die aus einem Wasserstoffatom, einer Alkylgruppe und einer Heteroalkylgruppe besteht,
X₁ ein anionischer Ligand ist, und
A ein Anion ist.

3. Rutheniumalkyliden-Komplex nach Anspruch 2, wobei R1 aus der Gruppe ausgewählt ist, die aus 2,4,6-Trimethylphenyl, 3,5-Dinitrophenyl, 2,4,6-Tris(trifluormethyl)phenyl, 2,4,6-Trichlorphenyl und Hexafluorphenyl besteht.

4. Rutheniumalkyliden-Komplex nach einem der Ansprüche 2 und 3, wobei R2 aus der Gruppe ausgewählt ist, die aus Cyclopentyl, Cyclohexyl, Cycloheptyl, Cyclooctyl, Cyclodecyl, Cyclododecyl und Cyclopentadecyl besteht.

5. Rutheniumalkyliden-Komplex nach einem der Ansprüche 2 bis 4, wobei R3 und R4 jeweils ein Wasserstoffatom sind.

6. Rutheniumalkyliden-Komplex nach Anspruch 1, wobei der Komplex von einer allgemeinen Formel ist, die aus der Gruppe ausgewählt ist, die besteht aus der Formel 1.1 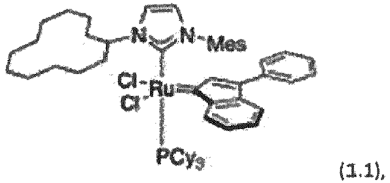 worin PCy3 Tricyclohexylphosphin darstellt, Mes die Mesilytgruppe darstellt;
der Formel 1.2: 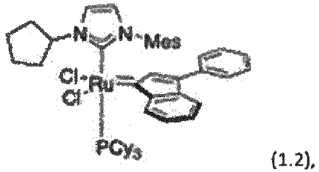 worin PCy3 Tricyclohexylphosphin und Mes die Mesilytgruppe darstellt;
der Formel 2.1: 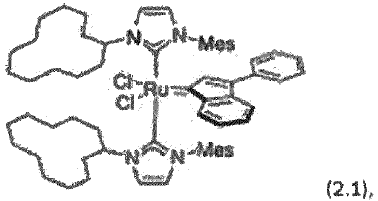 worin Mes die Mesilytgruppe darstellt;
und der Formel 2.2: 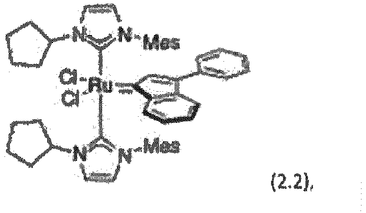 worin Mes die Mesilytgruppe darstellt.

7. Verwendung eines Rutheniumalkyliden-Komplexes nach einem der vorhergehenden Ansprüche als Katalysator in einer Olefinmetathesereaktion.

8. Verfahren zum Herstellen eines Rutheniumalkyliden-Komplexes, die folgenden Schritte umfassend:
a. Ausbilden eines ersten Reaktionsgemischs, indem ein Imidazoliumsalz der Formel 1S: 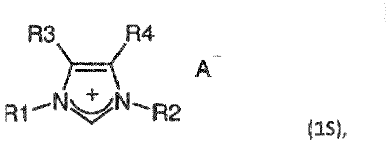 worin
R1 eine aromatische Gruppe ist,
R2 aus einer Gruppe ausgewählt ist, die aus einer zyklischen, sekundären, aliphatischen Alkylgruppe und einer Heteroalkylgruppe besteht,
R3 und R4 unabhängig voneinander aus der Gruppe ausgewählt sind, die aus einem Wasserstoffatom, einem Halogenidatom und einer Alkylgruppe besteht, und A ein Anion ist,
mit einer starken Base in einem Lösungsmittel unter einer Schutzgasatmosphäre bei Umgebungstemperatur während einer Dauer von mindestens 30 Minuten in Kontakt gesetzt wird;
b. Zusetzen, zu dem im Schritt a. ausgebildeten Reaktionsgemisch, einer Rutheniumkomplexvorstufe, dann Erwärmen auf eine Temperatur von mindestens 40°C während einer Dauer von mindestens 2 Stunden;
c. Abscheiden eines Rutheniumalkyliden-Komplexes.

9. Verfahren nach Anspruch 8, wobei der Schritt b. bei einer Temperatur von ca. 80°C erfolgt.

10. Verfahren nach einem der Ansprüche 8 und 9, wobei die im Schritt b. zugesetzte Rutheniumkomplexvorstufe von der Formel 1 P ist: 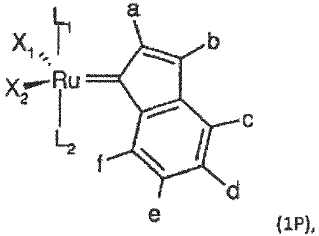 worin
X₁ und X₂ anionische Liganden sind,
L₁ und L₂ nicht geladene Liganden sind, vorzugsweise Tricyclohexylphosphin, und
a, b, c, d, e und f unabhängig voneinander aus der Gruppe ausgewählt sind, die aus einem Wasserstoffatom, einer Alkylgruppe und einer Heteroalkylgruppe besteht.

11. Verfahren nach einem der Ansprüche 8 und 9, wobei die im Schritt b. zugesetzte Rutheniumkomplexvorstufe von der Formel 2P ist: 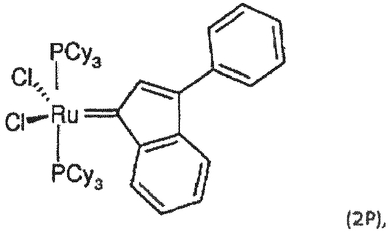 worin PCy3 Tricyclohexylphosphin darstellt.

12. Verfahren nach einem der Ansprüche 8 bis 11, darüber hinaus den Schritt umfassend:
d. Ausbilden eines zweiten Reaktionsgemischs, indem der im Schritt c. isolierte Rutheniumalkyliden-Komplex mit einem Styrenylether in Kontakt gesetzt wird.

13. Verfahren nach Anspruch 8, wobei der Schritt b. während einer Dauer von mindestens 3 Stunden erfolgt, und wobei die Rutheniumkomplexvorstufe von der Art, genannt Hoveyda-Grubbs der 1. Generation ist.

14. Verfahren nach Anspruch 12, wobei der Styrenylether von der Formel 4H ist: 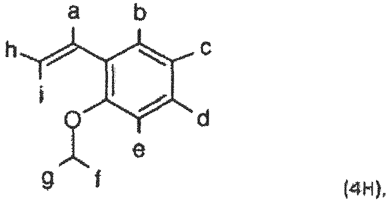 worin a, b, c, d, e, f, g, i und h unabhängig voneinander aus der Gruppe ausgewählt sind, die aus einem Wasserstoffatom, einer Alkylgruppe und einer Heteroalkylgruppe besteht.

## Claims

1. Alkylidene ruthenium complex comprising a 1-aryl-3-cycloalkyl-imidazolin-2-ylidene ligand, **characterized in that** the cycloalkyl group of said 1-aryl-3-cycloalkyl-imidazolin-2-ylidene ligand is a cyclic secondary aliphatic alkyl.

2. Alkylidene ruthenium complex according to Claim 1, in which said complex is of general formula selected from the group consisting of formula 1, 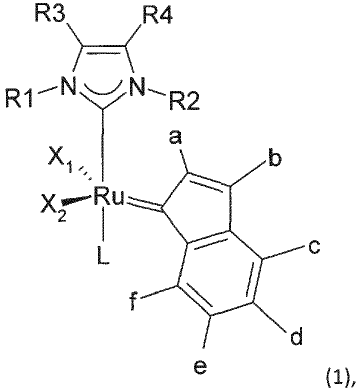 in which
R1 is an aromatic group,
R2 is a cyclic secondary aliphatic alkyl group,
R3 and R4 are selected independently of one another from the group consisting of a hydrogen atom, a halide and an alkyl group,
X₁ and X₂ are anionic ligands,
L is an uncharged ligand, and
a, b, c, d, e and f are selected independently of one another from the group consisting of a hydrogen atom, an alkyl group and a heteroalkyl group;
of formula 2: 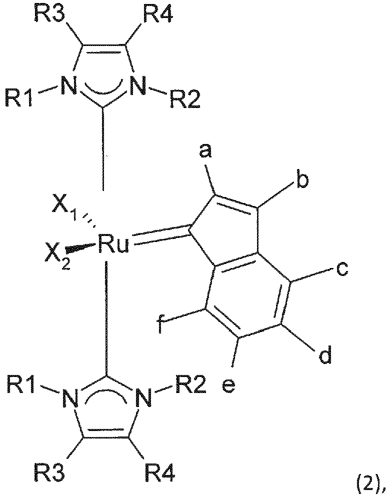 in which
R1 is an aromatic group,
R2 is a cyclic secondary aliphatic alkyl group,
R3 and R4 are selected independently of one another from the group consisting of a hydrogen atom, a halide and an alkyl group,
X₁ and X₂ are anionic ligands, and
a, b, c, d, e and f are selected independently of one another from the group consisting of a hydrogen atom, an alkyl group and a heteroalkyl group;
of formula 3: 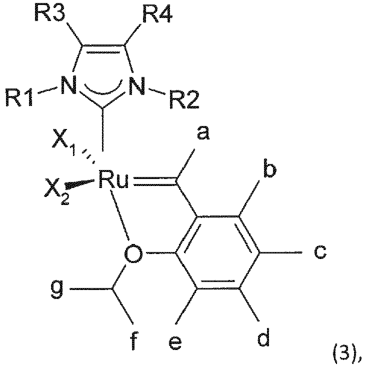 in which
R1 is an aromatic group,
R2 is a cyclic secondary aliphatic alkyl group,
R3 and R4 are selected independently of one another from the group consisting of a hydrogen atom, a halide and an alkyl group,
X₁ and X₂ are anionic ligands, and
a, b, c, d, e, f and g are selected independently of one another from the group consisting of a hydrogen atom, an alkyl group and a heteroalkyl group;
and of formula 4: 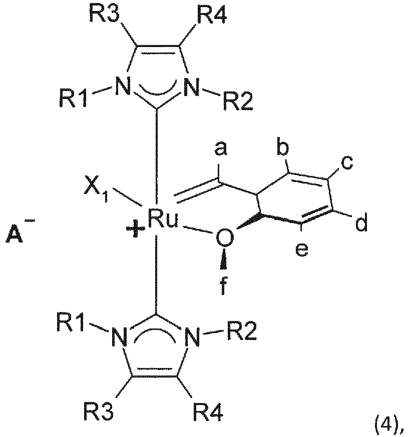 in which
R1 is an aromatic group,
R2 is a cyclic secondary aliphatic alkyl group,
R3 and R4 are selected independently of one another from the group consisting of a hydrogen atom, a halide and an alkyl group,
a, b, c, d, e and f are selected independently of one another from the group consisting of a hydrogen atom, an alkyl group and a heteroalkyl group,
X₁ is an anionic ligand, and
A⁻ is an anion.

3. Alkylidene ruthenium complex according to Claim 2, in which R1 is selected from the group consisting of 2,4,6-trimethylphenyl, 3,5-dinitrophenyl, 2,4,6-tris(trifluoromethyl)phenyl, 2,4,6-trichlorophenyl, and hexafluorophenyl.

4. Alkylidene ruthenium complex according to one of Claims 2 and 3, in which R2 is selected from the group consisting of cyclopentyl, cyclohexyl, cycloheptyl, cyclooctyl, cyclodecyl, cyclododecyl, and cyclopentadecyl.

5. Alkylidene ruthenium complex according to one of Claims 2 to 4, in which R3 and R4 are each a hydrogen atom.

6. Alkylidene ruthenium complex according to Claim 1, in which said complex is of formula selected from the group consisting of formula 1.1 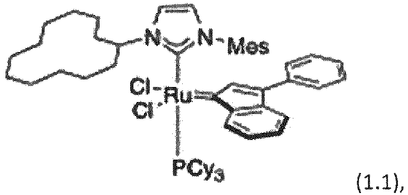 in which PCy₃ represents tricyclohexylphosphine, Mes represents the mesityl group;
of formula 1.2: 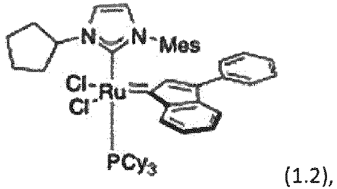 in which PCy₃ represents tricyclohexylphosphine and Mes represents the mesityl group;
of formula 2.1: 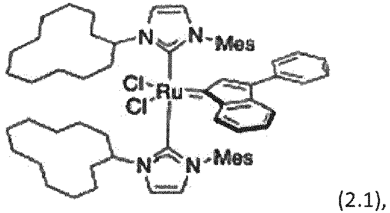 in which Mes represents the mesityl group;
and of formula 2.2, 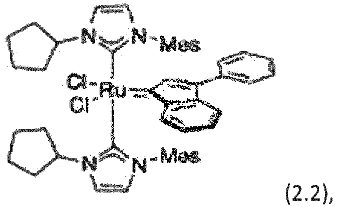 in which Mes represents the mesityl group.

7. Use of an alkylidene ruthenium complex according to one of the preceding claims as catalyst in an olefin metathesis reaction.

8. Method of preparing an alkylidene ruthenium complex comprising the following steps:
a. forming a first reaction mixture by contacting an imidazolium salt of formula 1S: 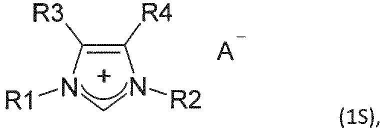 in which
R1 is an aromatic group,
R2 is selected from a cyclic secondary aliphatic alkyl group and a heteroalkyl group,
R3 and R4 are selected independently of one another from the group consisting of a hydrogen atom, a halide and an alkyl group, and
A⁻ is an anion,
with a strong base, in a solvent, under inert atmosphere, at room temperature, for at least 30 minutes;
b. adding a ruthenium complex precursor to the reaction mixture formed in step a., and then heating at a temperature of at least 40°C for at least 2 hours;
c. isolating an alkylidene ruthenium complex.

9. Method according to Claim 8, in which step b. is carried out at a temperature of about 80°C.

10. Method according to one of Claims 8 and 9, in which the ruthenium complex precursor added in step b. is of formula 1P: 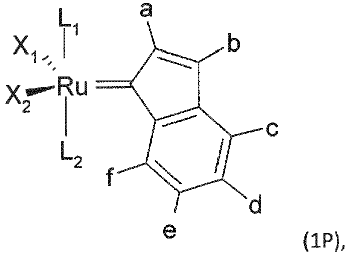 in which,
X₁ and X₂ are anionic ligands,
L₁ and L₂ are uncharged ligands, preferably tricyclohexylphosphine, and
a, b, c, d, e and f are selected independently of one another from the group consisting of a hydrogen atom, an alkyl group and a heteroalkyl group.

11. Method according to one of Claims 8 and 9, in which the ruthenium complex precursor added in step b. is of formula 2P: 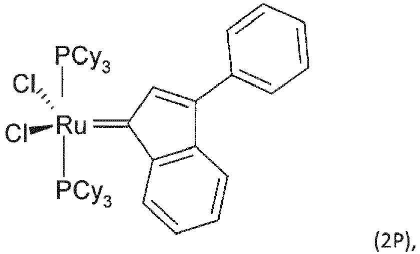 in which PCy3 represents tricyclohexylphosphine.

12. Method according to one of Claims 8 to 11, further comprising the step of:
d. forming a second reaction mixture by contacting the alkylidene ruthenium complex isolated in step c. with a styrenyl ether.

13. Method according to Claim 8, in which step b. is carried out for at least 3 hours and in which said ruthenium precursor complex is of the so-called first-generation Hoveyda-Grubbs type.

14. Method according to Claim 12, in which said styrenyl ether is of formula 4H: 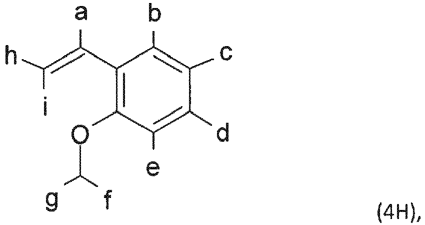 in which a, b, c, d, e, f, g, i and h are selected independently of one another from the group consisting of a hydrogen atom, an alkyl group and a heteroalkyl group.
